(19) Europäisches Patentamt
European Patent Office
Office européen des brevets

(11) **EP 1 049 963 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(51) Int Cl.$^7$: **G05B 19/418**

(21) Anmeldenummer: **99930893.5**

(86) Internationale Anmeldenummer:
**PCT/EP99/00156**

(22) Anmeldetag: **13.01.1999**

(87) Internationale Veröffentlichungsnummer:
**WO 99/036843 (22.07.1999 Gazette 1999/29)**

(54) **Verfahren und Vorrichtung zum Zuteilen von Industriellen oder Technologischen Ressourcen in Technischen Systemen**

Method and device for allocating industrial or technological resources in technical systems

Procédé et dispositif pour l'attribution de ressources industrielles et technologiques dans des systèmes techniques

(84) Benannte Vertragsstaaten:
**AT BE CH DE DK ES FI FR GB GR IE IT LI LU MC NL PT SE**

(30) Priorität: **15.01.1998 DE 19801177**

(43) Veröffentlichungstag der Anmeldung:
**08.11.2000 Patentblatt 2000/45**

(73) Patentinhaber: **Pischel, Jochen**
**30453 Hannover (DE)**

(72) Erfinder: **Pischel, Jochen**
**30453 Hannover (DE)**

(74) Vertreter: **Wagner, Carsten**
**Leine & Wagner Patentanwälte**
**Burckhardtstrasse 1**
**30163 Hannover (DE)**

(56) Entgegenhaltungen:
**EP-B- 0 248 812**          **DE-A- 4 227 727**
**DE-A- 19 609 081**          **DE-C- 4 425 348**
**US-A- 5 343 388**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Zuteilen von industriellen oder technologischen Ressourcen in technischen Systemen, insbesondere zur Vermeidung von Fehlfunktionen technischer Systeme.

In vielen technischen Systemen stehen, bedingt durch ihre Auslegung oder die Art ihres Betriebs, industrielle oder technologische Ressourcen nur in begrenztem Umfang zur Verfügung. Beispielsweise steht in einem Kommunikationsnetz, an das Teilnehmerstationen über Netzknoten angekoppelt sind, zur Verbindung der Netzknoten miteinander nur eine begrenzte Anzahl von Übertragungsleitungen zur Verfügung, über die die Teilnehmerstationen miteinander kommunizieren. Bei Betrieb des Kommunikationsnetzes können Betriebszustände auftreten, bei denen die gewünschte Funktion des Kommunikationsnetzes, nämlich die Übertragung von Daten von einer beliebigen Teinehmerstation zu einer beliebigen anderen Teilnehmerstation, aufgrund einer Überlastung von Teilen des Kommunikationsnetzes nicht mehr möglich ist. Derartige Fehlfunktionen des Netzes können dazu führen, daß eine Datenübertragung über das Netz zeitweise nicht mehr oder nicht mehr mit der erforderlichen Sicherheit möglich ist.

Derartige Fehlfunktionen lassen sich dadurch vermeiden, daß die in dem technischen System vorhandenen Ressourcen so zugeteilt werden, daß die gewünschte Funktion gewährleistet ist.

In einem Kommunikationsnetz kann die Zuteilung der Ressourcen beispielsweise derart erfolgen, daß beim Erreichen eines vorbestimmten Systemzustandes, beispielsweise beim Erreichen einer vorbestimmten Datendurchsatzrate im gesamten Netz oder in einzelnen Knoten des Netzes, zusätzliche Übertragungsleitungen in das Netz eingeschaltet werden, um zusätzliche Kapazitäten für die Übertragung von Daten zwischen den einzelnen Knoten zur Verfügung zu stellen.

Die Zuteilung der Ressourcen kann beispielsweise auch derart geschehen, daß beim Erreichen vorbestimmten maximalen Datendurchsatzrate im gesamten Netz oder in einzelnen Knoten des Netzes, bei der die Funktionsfähigkeit des Netzes gerade noch gewährleistet ist, das Netz gegen ein Anschalten weiterer Teilnehmerstationen an das Netz so lange gesperrt wird, bis andere Teilnehmerstationen ihre Datenübertragung beendet und sich vom Netz abgeschaltet haben. Auf diese Weise ist gewährleistet, daß diejenigen Teilnehmerstationen, die zum Zeitpunkt der Sperrung des Netzes gegen das Anschalten weiterer Teilnehmerstationen an das Netz angeschaltet waren, in der gewünschten Weise eine Datenübertragung zu jeder beliebigen anderen Teilnehmerstation vornehmen können.

Durch EP 0 248 812 B1 ist ein Verfahren zum Zuteilen von industriellen oder technologischen Ressourcen bekannt, das beispielsweise zum Zuteilen von Ressourcen in Kommunikationsnetzen geeignet ist.

Durch DE 44 25 348 C1 ist ein Verfahren zur Steuerung der Lastabwehr eines Echtzeitrechners bekannt, bei dem periodisch die aktuelle Last des Echtzeitrechners ermittelt und für eine Weiterverarbeitung gespeichert wird. Bei dem bekannten Verfahren wird aus mindestens zwei Lastwerten ein Lastmittelwert gebildet und der Lastwert und der Lastmittelwert durch Fuzzy-Regeln ausgewertet, wobei in Abhängigkeit von dem Lastwert und dem Lastmittelwert sowie einer Nennlast des Echtzeitrechners ein Lastkorrekturwert durch einen Fuzzy-Controller derart festgelegt wird, daß der Echtzeitrechner vorwiegend bei Nennlast läuft, und der Lastkorrekturwert dem Echtzeitrechner zugeführt wird.

Zur Zuteilung von Ressourcen in Systemen, deren Betriebszustand durch mehr als eine Kenngröße repräsentiert wird, ist das bekannte Verfahren nicht geeignet.

Der Erfindung liegt die Aufgabe zugrunde, ein Verfahren zum Zuteilen von industriellen oder technologischen Ressourcen in technischen Systemen anzugeben, das einfach durchführbar ist und das zuverlässig arbeitet.

Diese Aufgabe wird durch die im Anspruch 1 angegebene Lehre gelöst.

Die erfindungsgemäße Lehre geht von der grundsätzlichen Erkenntnis aus, daß in einem technischen System, dessen Betriebszustand durch Kenngrößen repräsentiert wird, beispielsweise der Betriebszustand eines Kommunikationsnetzes durch die an den einzelnen Netzknoten vorliegenden Datenübertragungsraten, den einzelnen Kenngrößen eine unterschiedliche Relevanz im Hinblick auf die Funktionsfähigkeit des Systems zukommen kann. Besteht die vorbestimmte Funktion eines Kommunikationsnetzes beispielsweise darin, jederzeit eine Datenübertragung von einer beliebigen Teilnehmerstation zu einer beliebigen anderen Teilnehmerstation zu ermöglichen, so können Betriebszustände auftreten, in denen einer oder mehrere der Netzknoten unter "Überlast" arbeiten, d. h. die an diesen Netzknoten vorliegende Datenübertragungsrate erreicht oder überschreitet einen vorbestimmten Datenübertragungsraten-Schwellenwert, ohne daß hierdurch die Funktionsfähigkeit des Netzes im Hinblick darauf, daß jederzeit eine Datenübertragung zwischen beliebigen Teilnehmerstationen möglich sein soll, beeinträchtigt wird.

Demgegenüber können andere Betriebszustände in dem Netz auftreten, bei denen wiederum einer oder mehrere der Netzknoten unter Überlast arbeiten, wobei dann die Funktionsfähigkeit des Netzes beeinträchtigt ist, d. h. es ist nicht mehr jederzeit eine Datenübertragung zwischen beliebigen Teilnehmerstationen möglich.

Hiervon ausgehend liegt der Erfindung der Gedanke zugrunde, ein Maß für den Einfluß der einzelnen Kenngrößen des Systems auf die Funktion des Systems zu ermitteln.

Hierbei geht die Erfindung von der weiteren Erkenntnis aus, daß es zur Ermittlung des Maßes für den Einfluß der einzelnen Kenngrößen auf die Funktion des Systems ausreichend ist, die Kenngrößen danach zu klassifizieren, ob ein vorbestimmter Kenngrößenwert erreicht ist. So kann es beispielsweise bei einem Kommunikationsnetz ausreichend sein, die Datendurchsatzrate der einzelnen Netzknoten danach zu klassifizieren, ob diese einen vorbestimmten Schwellenwert unterschreitet ("Netzknoten arbeitet unter normaler Last") oder den vorbestimmten Schwellenwert erreicht oder überschreitet ("Netzknoten arbeitet unter Überlast").

Weiterhin liegt der Erfindung der Gedanke zugrunde, Betriebszustände des Systems, bei denen jeweils eine vorbestimmte Funktion des Systems erreicht ist, beispielsweise in einem Kommunikationsnetz eine Datenübertragung zwischen zwei beliebigen Teilnehmerstationen möglich ist, in Form der momentanen Werte der Kenngrößen, beispielsweise al "Knoten arbeitet unter normaler Last" oder "Knoten arbeitet unter Überlast", aufzuzeichnen und die auf diese Weise aufgezeichneten Betriebszustände paarweise miteinander zu vergleichen, um hieraus ein Maß für den Einfluß der einzelnen Kenngrößen auf die Funktion des Systems zu ermitteln.

Ist der Einfluß der einzelnen Kenngrößen auf die Funktion des Systems ermittelt, so können die in dem System vorhandenen Ressourcen so zugeteilt werden, daß stets eine vorbestimmte Funktion des Systems erreicht ist oder erzielt wird.

Ist bei einem Kommunikationsnetz mit mehreren Netzknoten jeweils ein Maß für den Einfluß der einzelnen Netzknoten auf die Funktion des Kommunikationsnetzes ermittelt und damit die Relevanz der einzelnen Netzknoten für die Funktionsfähigkeit des Netzes bekannt, so kann das Netz beispielsweise durch selektives Anschalten und Abschalten zusätzlicher Übertragungsleitungen stets auf einem Betriebszustand gehalten werden, in dem die gewünschte Funktion des Systems vorliegt.

Ist beispielsweise bekannt, daß ein einzelner oder mehrere Netzknoten für die Funktionsfähigkeit des Netzes besonders relevant ist bzw. sind, während andere Netzknoten weniger relevant sind, so können im Bereich der relevanteren Netzknoten zusätzliche, gesteuert von einer Steuereinrichtung selektiv an- und abschaltbare Übertragungsleitungen vorgesehen sein, während im Bereich der weniger relevanten Netzknoten solche zusätzlichen Übertragungsleitungen nicht erforderlich sind. Wird beim Betrieb des Netzes durch Sensoren festgestellt, daß sich die Datenübertragungsrate an den für die Funktionsfähigkeit relevanteren Knoten einem Schwellenwert annähert, bei dessen Erreichen damit zu rechnen ist, daß das Netz seine Funktionsfähigkeit verliert, so können rechtzeitig vor dem Erreichen dieses Schwellenwertes die zusätzlich vorgesehenen Übertragungsleitungen im Bereich des betreffenden Knotens angeschaltet und dann, wenn die Datenübertragungsrate an dem betreffenden Knoten unter einen vorbestimmten Wert abfällt, wieder abgeschaltet werden.

Das erfindungsgemäße Verfahren ermöglicht auf diese Weise eine schnelle und effiziente Zuteilung von Ressourcen in technischen Systemen.

Durch die schnelle und effiziente Zuteilung von Ressourcen in technischen Systemes mittels des erfindungsgemäßen Verfahrens sind Fehlfunktionen dieser System zuverlässig vermeidbar.

Das erfindungsgemäße Verfahren ist für beliebige Systeme einsetzbar, beispielsweise bei der Steuerung von Ressourcen in Kommunikationsnetzen, Datenverarbeitungsanlagen, Mustererkennungssystemen, bei der Steuerung von automatischen Transportfahrzeugen in Fabriken usw.

Vorteilhafte und zweckmäßige Weiterbildungen der erfindungsgemäßen Lehre sind in den Unteransprüchen angegeben.

Die Erfindung wird nachfolgend anhand der beigefügten Zeichnung näher erläutert.

Es zeigt:

Fig. 1   ein schematisches Blockschaltbild eines Kommunikationsnetzes, das aus Teilnehmerstationen besteht, die über Netzknoten und Übertragungsleitungen miteinander verbunden sind,

Fig. 2   ein schematisches Blockschaltbild einer Vorrichtung zur Durchführung des erfindungsgemäßen Verfahrens,

Fig. 3   eine tabellenartige Zusammenstellung von unterschiedlichen Betriebszuständen des Kommunikationsnetzes gemäß Fig. 1, wobei die Datendurchsatzrate als Kenngröße der einzelnen Netzknoten jeweils durch den Zustand "normal" oder "Überlast" gekennzeichnet ist,

Fig. 4a bis 8a   in unterschiedlichen Zyklen des erfindungsgemäßen Verfahrens erzeugte Testvektoren,

Fig. 4b bis 8b   Zählermatrizen, die sich bei Auswertung der Testvektoren gemäß den Fig. 4a bis 8a in den Zyklen des erfindungsgemäßen Verfahrens, in denen der jeweilige Testvektor erzeugt worden ist, ergeben,

Fig. 9   eine tabellenartige Zusammenstellung von zu den einzelnen Betriebszuständen gemäß Fig. 3 gehörigen Ergebnisvektoren und

Fig. 10   den unter Auswertung der Ergebnisvektoren gemäß Fig. 9 erhaltenen Gesamt-Ergebnisvektor.

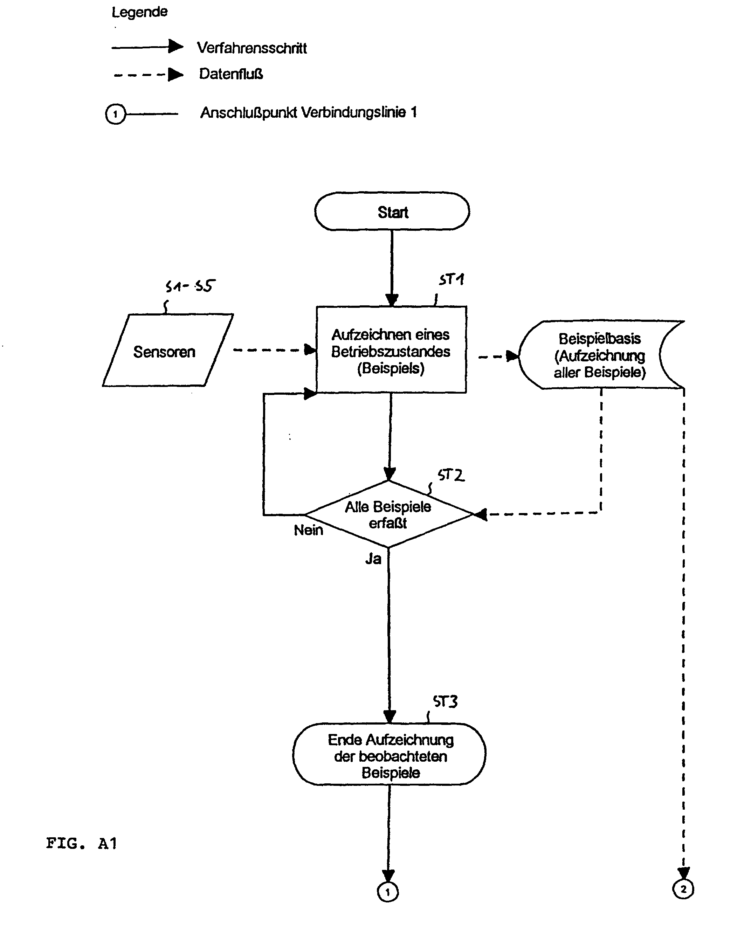

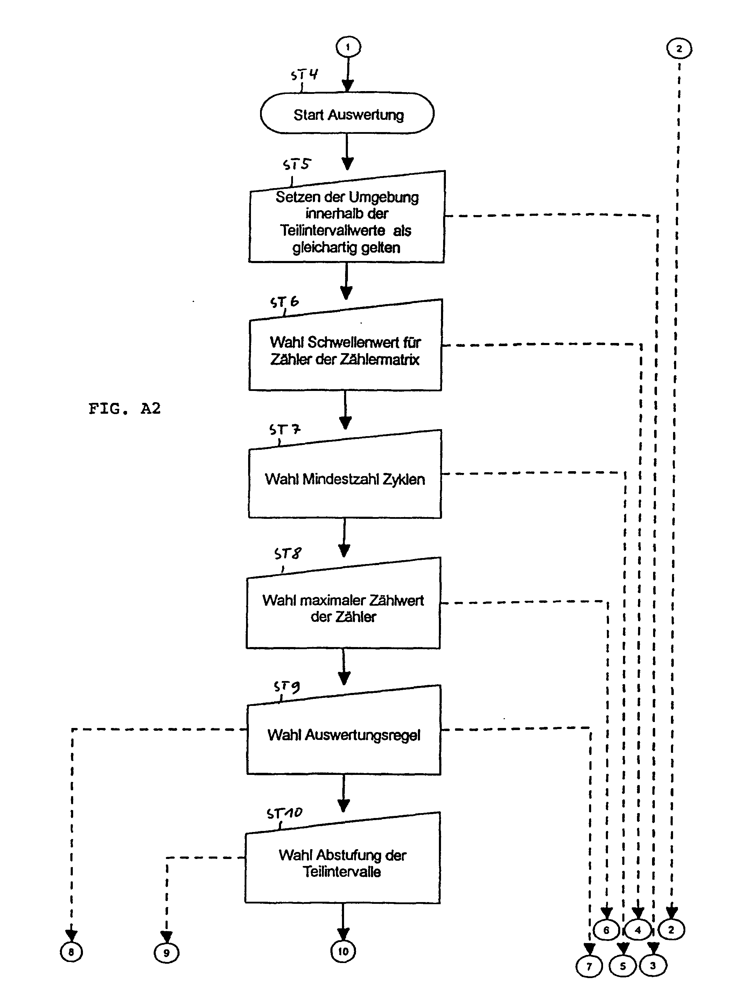

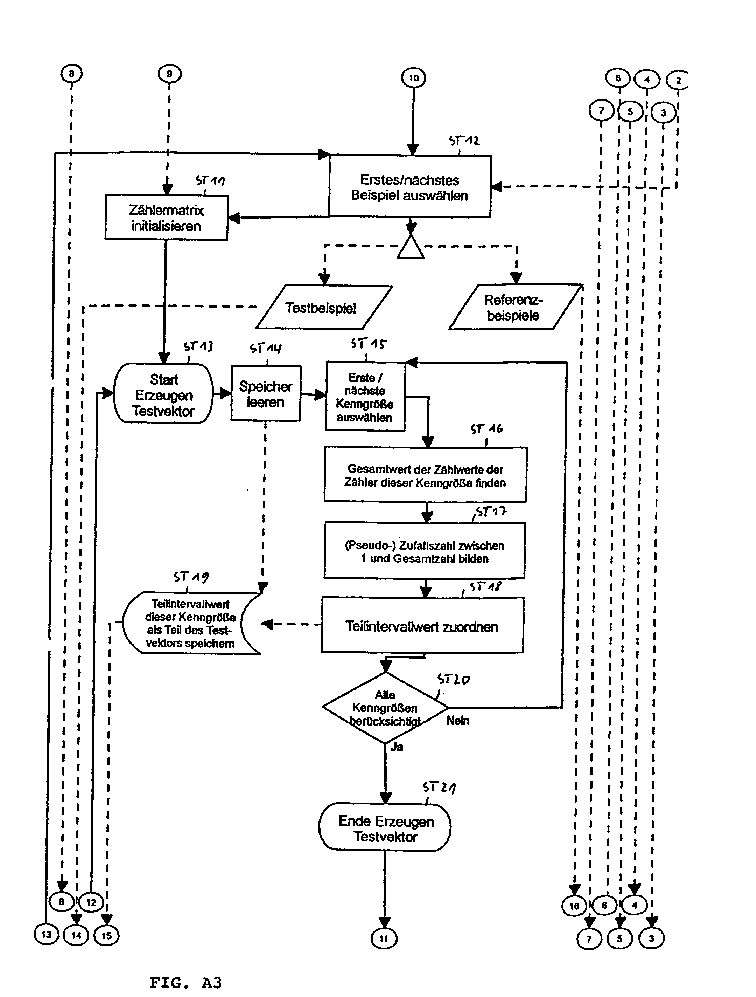

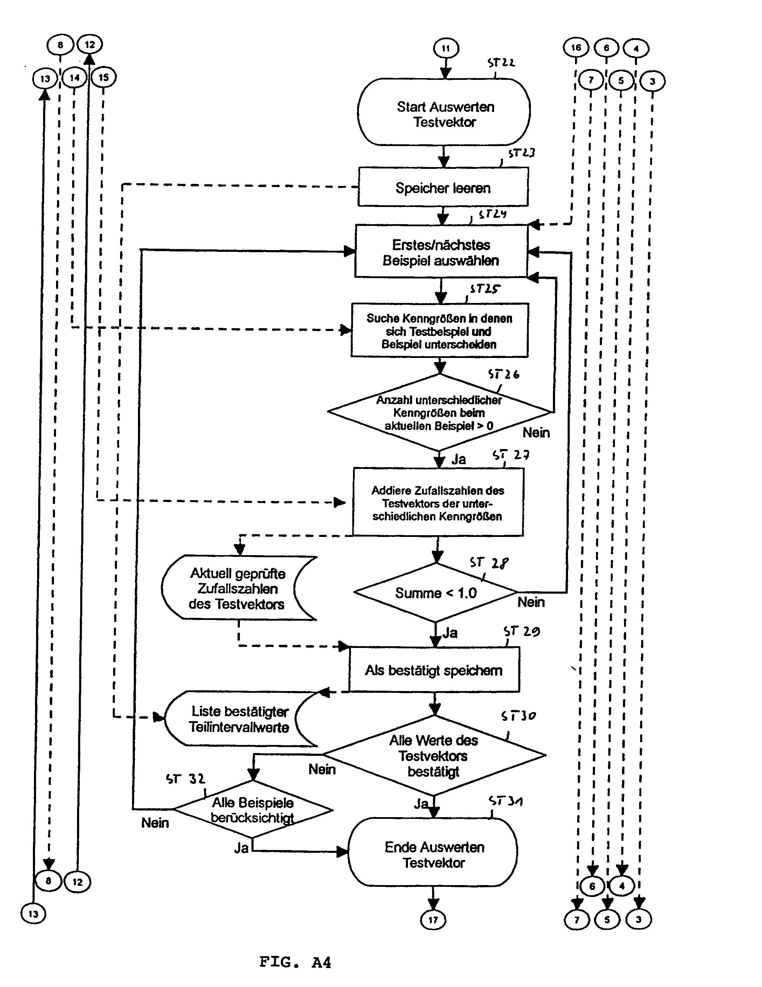

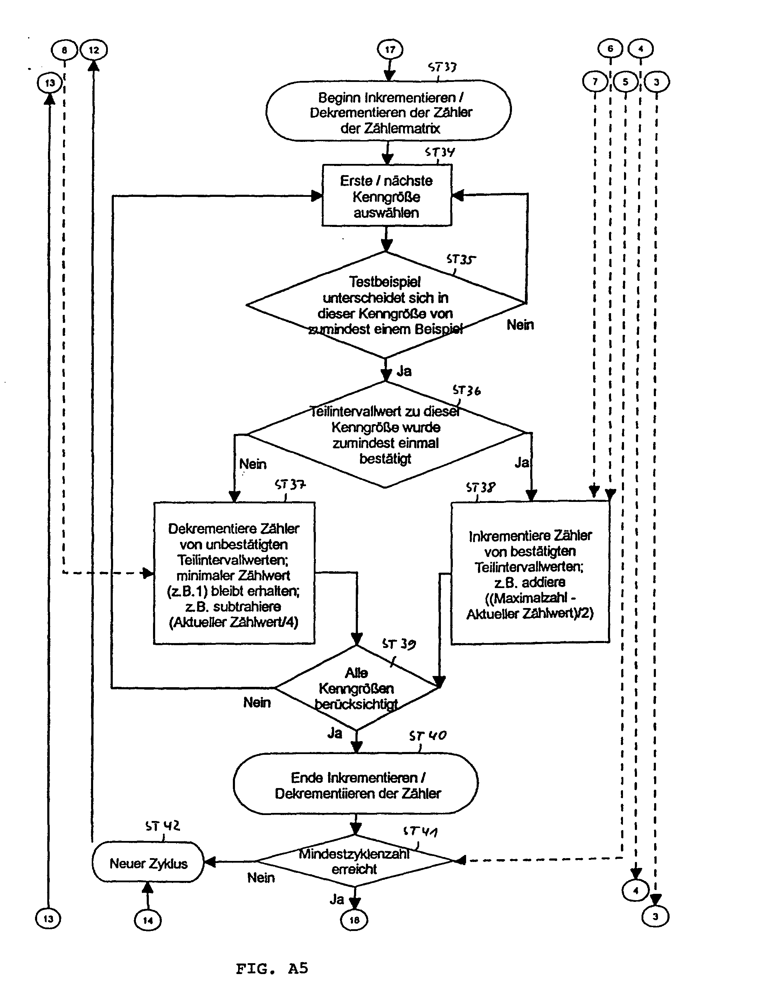

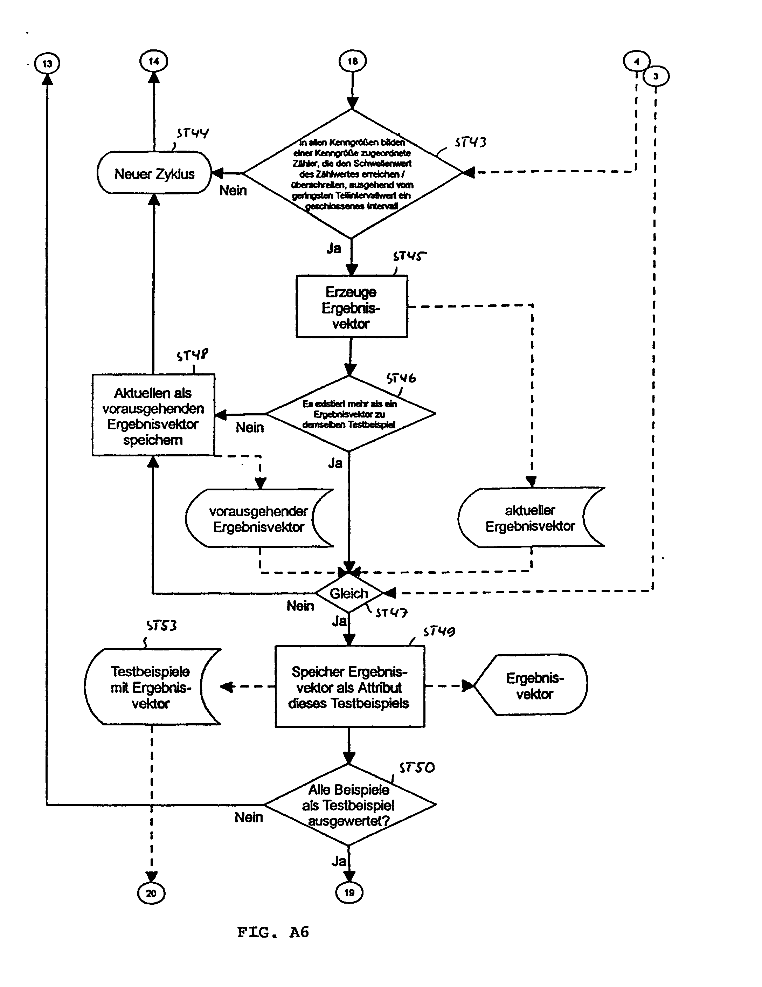

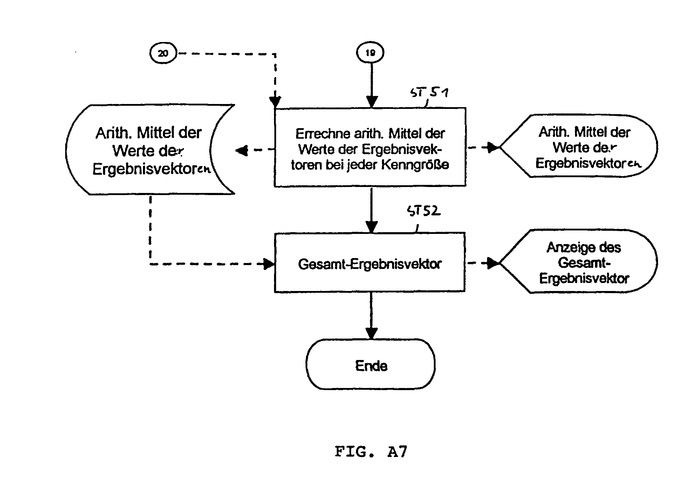

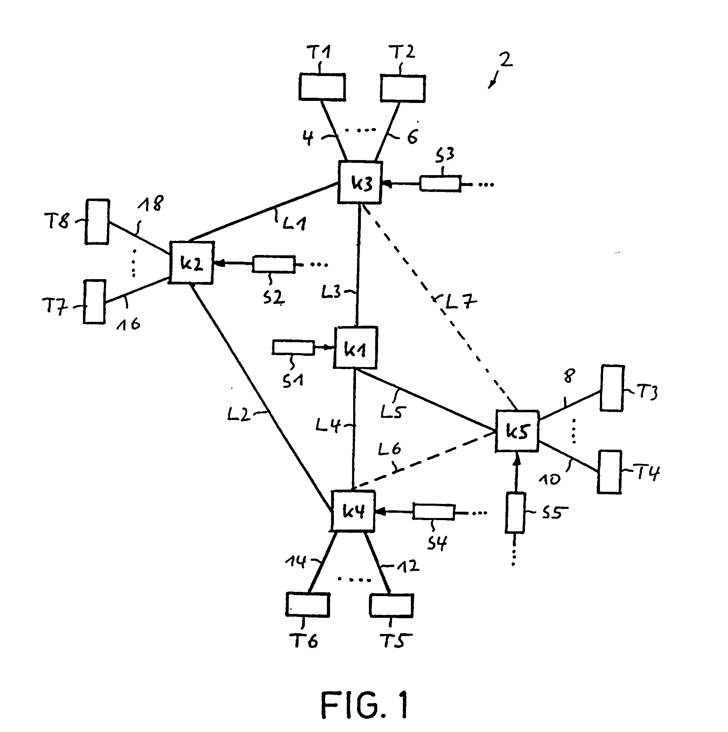

In Fig. 1 ist ein schematisches Blockschaltbild eines Kommunikationsnetzes 2 dargestellt, das Teilnehmerstationen T1 - T8 sowie weitere, in Fig. 1 nicht dargestellte Teilnehmerstationen aufweist. Die Teilnehmerstationen T1, T2 sind über Leitungen 4, 6 mit einem Netzknoten K3, die Teilnehmerstationen T3, T4 über Leitungen 8, 10 mit einem Netzknoten K5, die Teilnehmer-Stationen T5, T6 über Leitungen 12, 14 mit einem Netzknoten K4 und die Teilnehmerstationen T7, T8 über Leitungen 16, 18 mit einem Netzknoten K2 verbunden.

Ein Netzknoten K1 ist über eine Leitung L3 mit dem Netzknoten K3, über eine Leitung L4 mit dem Netzknoten K4 und über eine Leitung L5 mit dem Netzknoten K5 verbunden.

Der Netzknoten K2 ist über eine Leitung L1 mit dem Netzknoten K3 und über eine Leitung L2 mit dem Netzknoten K4 verbunden.

Der Netzknoten K3 ist über eine unter Einwirkung einer in Fig.1 nicht dargestellten Steuereinrichtung zuschaltbare Leitung L7 mit dem Netzknoten K5 verbindbar.

Der Netzknoten K4 ist über eine unter Einwirkung der Steuereinrichtung zuschaltbare Leitung L6 mit dem Netzknoten K5 verbindbar.

Der Netzknoten K5 ist über die Leitung L5 mit dem Netzknoten K1 verbunden.

Den Netzknoten K1 - K5 sind Sensoren S1 - S5 zugeordnet, die fortlaufend oder jeweils nach vorbestimmten Zeitintervallen, die jeweils an dem zugeordneten Netzknoten vorliegende Datenübertragungsrate feststellen. Die Ausgangssignale der Sensoren S1 - S5 bilden Eingangssignale für eine in Fig. 1 nicht dargestellte Vorrichtung zur Durchführung des erfindungsgemäßen Verfahrens.

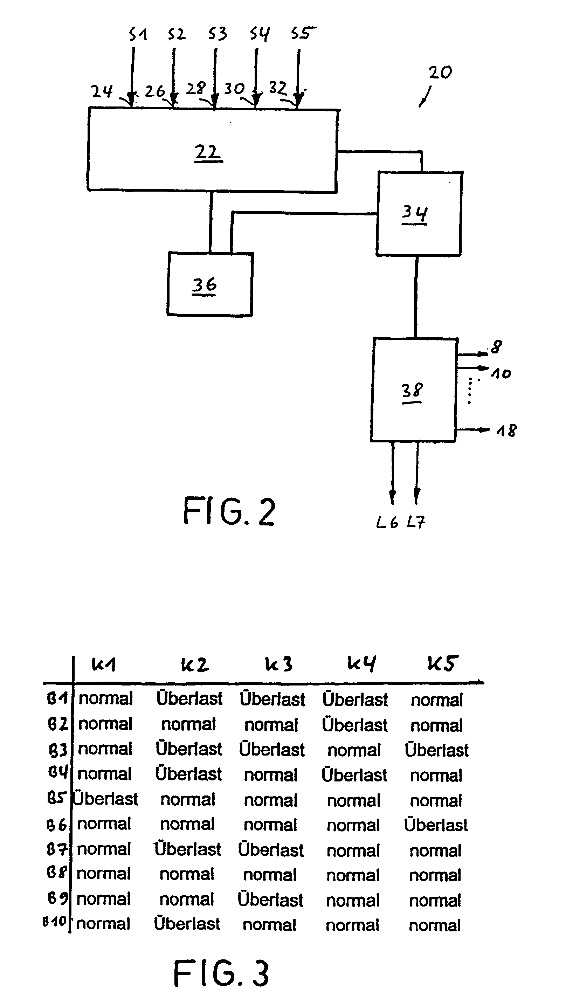

In Fig. 2 ist eine Vorrichtung 20 zur Durchführung des erfindungsgemäßen Verfahrens dargestellt, die eine Speichereinrichtung 22 aufweist, deren Eingänge 24 - 32 mit den Ausgängen der Sensoren S1 - S5 verbunden sind, derart, daß die Ausgangssignale der Sensoren S1 - S5 Eingangssignale der Speichereinrichtung 22 bilden.

Die Vorrichtung 20 weist ferner eine Steuereinrichtung 34 auf, die mit einer Auswerteeinrichtung 36 und einer Schalteinrichtung 38, die weiter unten näher beschrieben wird, verbunden ist.

Die Auswerteeinrichtung 36 ist mit der Speichereinrichtung 22 verbunden.

Die Schalteinrichtung 38 schaltet unter Einwirkung der Steuereinrichtung 34 die Übertragungsleitungen L6 und L7 in das Netz ein und von diesem ab und/oder sperrt in weiter unten näher beschriebener Weise unter Einwirkung der Steuereinrichtung 34 zeitweise einzelnen der Teilnehmerstationen T1 - T8 sowie der weiteren, in Fig. 1 nicht dargestellten Teilnehmereinrichtungen den Zugang zu dem Kommunikationsnetz 2.

Das in Fig. 2 dargestellte Ausführungsbeispiel der erfindungsgemäßen Vorrichtung 20 dient zum Zuteilen der in dem Kommunikationsnetz 2 zur Datenübertragung zur Verfügung stehenden Ressourcen. Die Vorrichtung 20 arbeitet in weiter unten näher beschriebener Weise nach dem erfindungsgemäßen Verfahren.

In Fig. 3 sind tabellenartig zehn unterschiedliche, mit B1 - B10 bezeichnete Betriebszustände des Kommunikationsnetzes 2 gemäß Fig. 1 dargestellt, wobei der jeweilige Betriebszustand des Netzes 2 durch jeweils fünf Kenngrößen repräsentiert ist, die bei dem Ausführungsbeispiel durch die Datendurchsatzrate jedes der Netzknoten K1 - K5 gebildet sind. Die Datendurchsatzraten an den Netzknoten K1 - K5 werden hierbei von den Sensoren S1 - S5 erfaßt.

Aus den auf diese Weise erfaßten Datendurchsatzraten werden dann für die Netzknoten K1 - K5 die jeweiligen Kenngrößenwerte entweder durch in den Sensoren S1-S5 vorgesehene Einrichtungen oder durch zwischen den Sensoren S1 - S5 und der Speichereinrichtung 22 zwischengeschaltete Einrichtungen die für die weitere Verarbeitung im Verlaufe des erfindungsgemäßen Verfahrens erforderlichen Kenngrößenwerte für jeden der Betriebszustände B1 - B10 ermittelt.

Hierbei wird einem Netzknoten K1 - K5 dann der Betriebszustand "normal" zugeordnet, wenn die Datendurchsatzrate an dem betreffenden Knoten unterhalb eines vorbestimmten Datendurchsatzraten-Schwellenwertes liegt, und dem Knoten wird der Kenngrößenwert "Überlast" zugeordnet, wenn die Datendurchsatzrate den Datendurchsatzraten-Schwellenwert erreicht oder überschreitet.

Bei den in Fig. 3 dargestellten Betriebszuständen B1 - B10 wird jeweils eine vorbestimmte Funktion des Kommunikationsnetzes 2 erreicht, die bei dem Ausführungsbeispiel darin besteht, daß zu jedem Zeitpunkt von einer beliebigen der zu diesem Zeitpunkt an das Kommunikationsnetz 2 angeschalteten Teilnehmerstationen T1-T8 Daten zu einer beliebigen anderen der zu diesem Zeitpunkt in das Netz eingeschalteten Teilnehmerstationen T1 - T8 übertragen werden können.

Die vorbestimmte Funktion des Kommunikationsnetzes 2 wird sowohl bei den Betriebszuständen B2, B5, B6, B9 und B10, bei denen jeweils eine der Kenngrößen den Wert "Überlast" aufweist, als auch bei den Betriebszuständen B1, B3, B4 und B7, bei denen jeweils wenigstens zwei Kenngrößen den Kenngrößenwert "Überlast" aufweisen, erreicht.

Demgegenüber existiert ein weiterer Betriebszustand, der durch die folgenden Kenngrößenwerte repräsentiert wird:

| K1 | K2 | K3 | K4 | K5 |
|---|---|---|---|---|
| Überlast | normal | normal | normal | Überlast. |

Bei diesem Betriebszustand ist das Kommunikationsnetz 2 insgesamt überlastet, so daß die vorbestimmte Funktion des Systems, nämlich die Übertragbarkeit von Daten von einer beliebigen Teilnehmerstation T1 - T8 zu einer beliebigen anderen Teilnehmerstation T1 - T8 nicht mehr gewährleistet ist.

Der Ablauf des erfindungsgemäßen Verfahrens zum Zuteilen von Ressourcen in dem Kommunikationsnetz 2 ist wie folgt:

In Anhang A ist ein Ablaufplan eines Ausführungsbeispieles des erfindungsgemäßen Verfahrens dargestellt, auf den nachfolgend Bezug genommen wird, wobei die Verfahrensschritte mit ST1 - ST53 bezeichnet sind.

Zu Beginn des Verfahrens werden über die Sensoren S1 - S5, die Detektionsmittel bilden, diejenigen Betriebszustände des Kommunikationsnetzes 2, repräsentiert durch ihre jeweiligen Kenngrößenwerte, detektiert, bei denen das Kommunikationsnetz 2 die vorbestimmte Funktion erreicht. Hierbei wird ein Betriebszustand nur dann in der Speichereinrichtung 22 abgespeichert, wenn durch in der Zeichnung nicht dargestellte Mittel detektiert wird, daß bei diesem Betriebszustand die vorbestimmte Funktion des Netzes 2 erreicht ist. Dieser Vorgang wird so lange wiederholt (Schritte ST1 - ST3), bis entweder sämtliche Betriebszustände, bei denen die vorbestimmte Funktion des Systems erreicht ist, oder eine vorgebbare Anzahl solcher Betriebszustände abgespeichert ist.

Bei dem Kommunikationsnetz gemäß Fig. 1 wird annahmegemäß die vorbestimmte Funktion des Systems ausschließlich bei den in der Tabelle in Fig. 3 dargestellten Betriebszuständen, die nachfolgend auch als Beispiele bezeichnet werden, erreicht.

Nach Ermittlung der Tabelle gemäß Fig. 3 und Abspeicherung in der Speichereinrichtung 22 wird, gesteuert von der Steuereinrichtung 34, ein Maximalwert, bei dem Ausführungsbeispiel der Wert 1, und ein Minimalwert, bei dem Ausführungsbeispiel der Wert 0, für ein erstes Maß (Toleranzmaß) für den Einfluß der einzelnen Kenngrößen K1 - K5 auf die Funktion des Systems, also des Kommunikationsnetzes 2, vorgegeben.

Daran anschließend wird das zwischen dem Maximalwert 1 und dem Minimalwert 0 gebildete Intervall in Teilintervallwerte unterteilt, deren Abstand bei dem Ausführungsbeispiel 0.1 beträgt, so daß sich bei dem Ausführungsbeispiel insgesamt 11 Teilintervallwerte ergeben, nämlich die Werte 0.0 bis 1.0 (Schritt ST10).

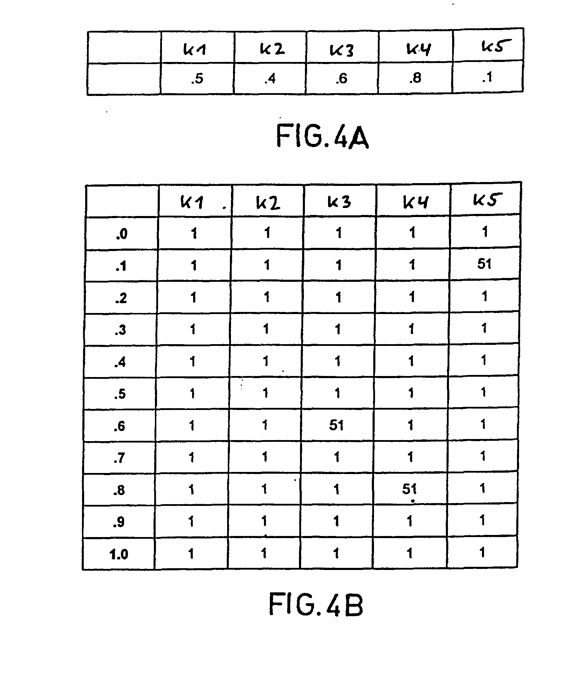

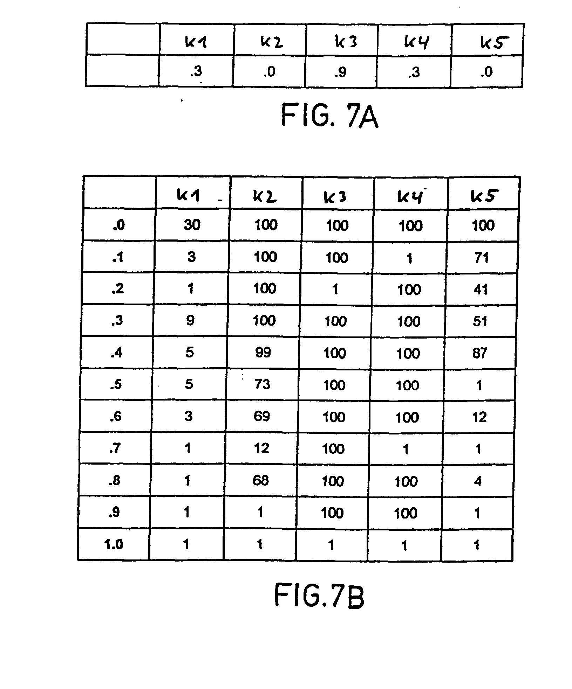

Daran anschließend wird eine Matrix von Zählern initialisiert (Schritt ST11), wobei jeweils einer der Spalten der Matrix eine der Kenngrößen, bei dem Ausführungsbeispiel die Datendurchsatzrate der Netzknoten K1 - K5, und jeweils einer Zeile der Matrix einer der zuvor gebildeten Teilintervallwerte 0.0 - 1.0 zugeordnet wird. Bei dem Ausführungsbeispiel besteht die Zählermatrix, die in der Speichereinrichtung 22 abgespeichert wird, somit aus 55 Zählern, wie dies aus den Fig. 4b - 8b ersichtlich ist. In der Zeichnung ist nicht ersichtlich und deshalb wird hier erläutert, daß zunächst jeder Zähler mit demselben Zählwert "1" initialisiert wird.

Daran anschließend wird durch die Steuereinrichtung 34 ein erster der abgespeicherten Betriebszustände (Beispiele) als Testbeispiel ausgewählt (Schritt ST12).

Dann wird durch die Auswerteeinrichtung 36 ein Testvektor erzeugt (Schritt ST13) und in der Speichereinrichtung 22 abgespeichert, wobei in dem Testvektor jeder Kenngröße eine Zufallszahl zugeordnet ist, die einem der Teilintervallwerte 0.0 bis 1.0 entspricht. Die Wahrscheinlichkeit jedes Teilintervallwertes als Zufallszahl errechnet sich aus dem Anteil der jeweiligen Zähler des Teilintervallwertes bei der jeweiligen Kenngröße an der Summe aller Zähler, die dieser Kenngröße zugeordnet sind.

In den Fig. 4 - 8 sind die sich bei unterschiedlichen Zyklen (Durchläufen) des erfindungsgemäßen Verfahrens ergebenden Testvektoren und die sich nach Auswertung des jeweiligen Testvektors ergebenden Werte der Zählermatrix dargestellt.

Zunächst wird von der Steuereinrichtung 34 das Beispiel B1 als Testbeispiel ausgewählt.

Für dieses Testbeispiel wird zunächst der in Fig. 4a dargestellte Testvektor durch Erzeugung von jeweils einer Zufallszahl zu einer der Kenngrößen K1 - K5 erzeugt und dieser Testvektor in der Speichereinrichtung 22 abgespeichert (Schritte ST15 - ST19).

Dann wird das Testbeispiel B1 mit den weiteren abgespeicherten Betriebszuständen (Beispielen B2 - B10) verglichen (Schritte ST24 - ST31), um festzustellen, ob zu dem Testbeispiel ein Referenzbeispiel existiert. Das ist der Fall, wenn die Summe der Zufallszahlen des Testvektors, die den Kenngrößen, in denen sich das Testbeispiel von einem weiteren der abgespeicherten Betriebszustände unterscheidet, zugeordnet sind, kleiner als ein vorgegebener Wert, bei dem Ausführungsbeispiel kleiner als 1.0, ist (Schritt ST28).

Ein Vergleich des Testbeispiels B1 mit dem Beispiel B2 ergibt folgendes: Die beiden Beispiele unterscheiden sich in den Kenngrößen K2 und K3. Die diesen Kenngrößen in dem Testvektor zugeordneten Zufallszahlen 0.4 und 0.6 ergeben eine Summe von 1.0, so daß das Beispiel B2 zu dem Testbeispiel B1 kein Referenzbeispiel bildet.

Ein Vergleich des Testbeispiels B1 mit dem Beispiel B3 ergibt folgendes: Die beiden Beispiele unterscheiden sich in den Kenngrößen K4 und K5; die diesen Kenngrößen in dem Testvektor zugeordneten Werte 0.8 und 0.1 ergeben eine Summe von 0.9. Das Beispiel B3 ist also zu dem Testbeispiel B1 ein Referenzbeispiel.

Ein Vergleich des Testbeispieles B1 mit dem Beispiel B4 ergibt folgendes: Die beiden Beispiele unterscheiden sich lediglich in der Kenngröße K3, der in dem Testvektor der Wert 0.6 zugeordnet ist. Das Beispiel B4 bildet also zu dem Testbeispiel B1 ebenfalls ein Referenzbeispiel.

In entsprechender Weise ergibt ein Vergleich des Testbeispiels B1 mit dem Beispiel B7 folgendes: Die beiden Beispiele unterscheiden sich lediglich in dem Merkmal K4, dem in dem Testvektor der Wert 0.8 zugeordnet wird. Es ergibt sich also ein Summenwert von 0.8, so daß auch das Beispiel B7 ein Referenzbeispiel zu dem Testbeispiel B1 bildet.

Zur Auswertung des Testbeispieles B1 wird bei dem Ausführungsbeispiel des erfindungsgemäßen Verfahrens das Testbeispiel B1 mit jedem der weiteren Beispiele B2 - B10 verglichen. Es ist jedoch auch möglich, die Auswertung eines Testbeispieles bereits dann zu beenden, wenn zu diesem Testbeispiel ein einziges Referenzbeispiel gefunden ist.

Nach Vergleich des Testbeispieles B1 mit den weiteren Beispielen werden (Schritte ST33 - ST40) diejenigen Zähler der Zählermatrix um einen vorbestimmten Zählwert inkrementiert, die den Kenngrößen, in denen sich das Referenzbeispiel von dem Testbeispiel unterscheidet, und den diesen Kenngrößen in dem Testvektor zugeordneten Teilintervallwerten zugeordnet sind (Schritt ST38).

Der vorbestimmte Zählwert, um den die betreffenden Zähler inkrementiert werden, ergibt sich im vorliegenden Ausführungsbeispiel nach der folgenden Formel:

$$\text{vorbestimmter Zählwert} = \text{RND}\,((\text{maximaler Zählwert}$$

$$\text{minus aktueller Zählwert}) * 0.5),$$

wobei RND für eine Rundungsoperation steht. Im vorliegenden Ausführungsbeispiel ist als maximaler Zählwert (Schritt ST8) der Wert 100 gewählt, so daß sich als Zählwert, um den die Zähler in dem in Fig. 4 dargestellten Zyklus inkrementiert wird, der Wert RND ((100 minus 1)/2) = 50 ergibt.

Mit diesem vorbestimmten Zählwert werden diejenigen Zähler der Zählermatrix inkrementiert, die den Kenngrößen, in denen sich das Testbeispiel von einem Referenzbeispiel unterscheidet, und den diesen Kenngrößen in dem Testvektor zugeordneten Teilintervallen zugeordnet sind; im vorliegenden Fall also der der Kenngröße K3 und dem Teilintervallwert 0.6 zugeordnete Zähler, der der Kenngröße K4 und dem Teilintervallwert 0.8 zugeordnete Zähler und der der Kenngröße K5 und dem Teilintervallwert 0.1 zugeordnete Zähler. Hieraus ergibt sich die in Fig. 4b dargestellte Zählermatrix.

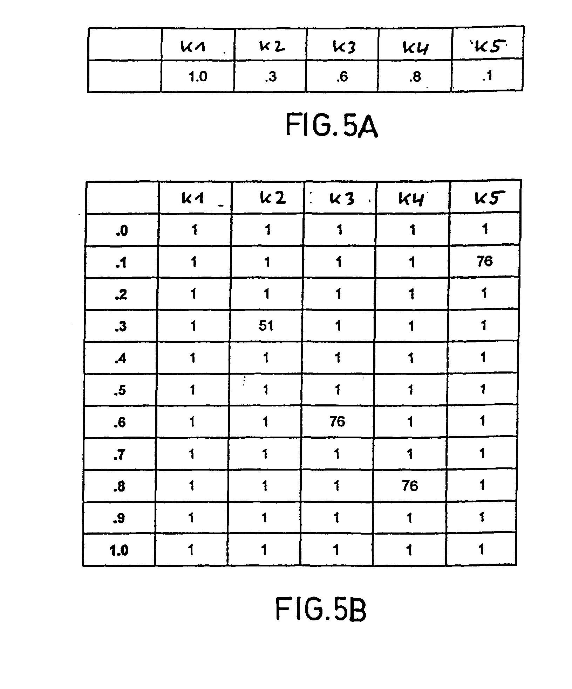

Nach Auswertung des Testvektors gemäß Fig. 4a wird im nächsten Zyklus (Schritt ST42) des erfindungsgemäßen Verfahrens ein neuer Testvektor erzeugt, wie er in Fig. 5a dargestellt wird. Dann wird das Testbeispiel B1 wiederum mit jedem der weiteren Beispiele B2 - B10 verglichen, um festzustellen, ob bei dem Testvektor gemäß Fig. 5a zu dem Testbeispiel B1 wenigstens ein Referenzbeispiel existiert.

Ein paarweiser Vergleich ergibt, daß die Beispiele B2, B3, B4 und B7 Referenzbeispiele bilden, da in Bezug auf diese Beispiele die Summe der Zufallszahlen des Testvektors, die den Kenngrößen, in denen sich das Testbeispiel B1 von dem jeweiligen weiteren Beispiel unterscheidet, zugeordnet sind, einen Wert von 0.9 (B2), 0.9 (B3), 0.6 (B4) bzw. 0.8 (B7) aufweist.

Somit wird in diesem Zyklus der der Kenngröße K2 und dem Teilintervallwert 0.3 zugeordnete Zähler um den Wert 50, der der Kenngröße K3 und dem Teilintervallwert 0.6 zugeordnete Zähler um den Zählwert 25, der der Kenngröße K4 und dem Teilintervallwert 0.8 zugeordnete Zähler um den Zählwert 25 und der der Kenngröße K5 und dem Teilintervallwert 0.1 zugeordnete Zähler um den Zählwert 25 inkrementiert, so daß sich die aus Fig. 5b ersichtliche Zählermatrix ergibt.

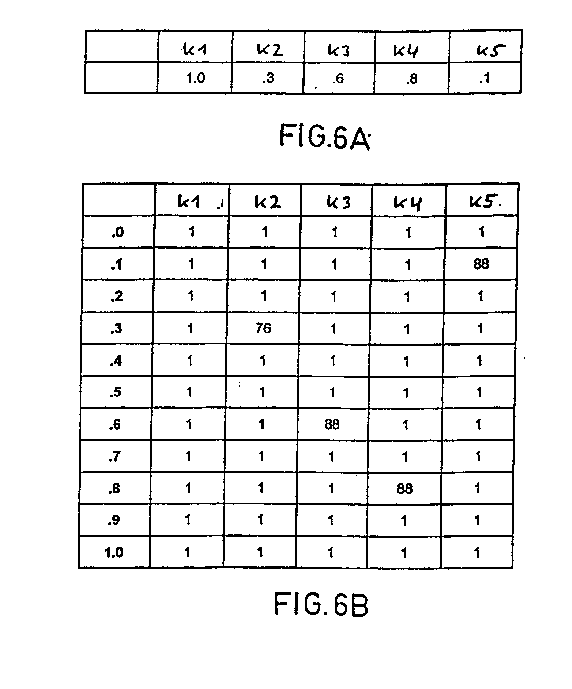

Die Fig. 6a, 7a und 8a zeigen jeweils im dritten, 1000. und 10000. Zyklus für das Testbeispiel B1 erzeugten Testvektoren. Die Figuren 6b, 7b und 8b zeigen die sich jeweils nach Auswertung der zugehörigen Testvektoren in den betreffenden Zyklen ergebenden Zählermatritzen.

Ergibt sich bei der Auswertung eines Testvektors, daß in Bezug auf diesen Testvektor zu dem Testbeispiel B1 kein Referenzbeispiel existiert, so werden jeweils die Zähler der Zählermatrix, die den Kenngrößen und den diesen Kenngrößen in dem Testvektor zugeordneten Teilintervallwerten zugeordnet sind, mit Ausnahme jener Zählwerte, deren Wert 1 beträgt, um einen zweiten vorbestimmten Zählwert, bei dem Ausführungsbeispiel um ein Viertel des aktuellen Zählwertes, dekrementiert (Schritt ST37).

Jeweils nach Erzeugung und Auswertung eines Testvektors wird bei dem erfindungsgemäßen Verfahren geprüft (Schritt ST43), ob in Bezug auf eine Kenngröße Zähler, die dieser Kenngröße und den Teilintervallwerten 0.0 bis 1.0 zugeordnet sind, in einem durchgehenden Intervall, ausgehend von dem niedrigsten Teilintervallwert 0.0, durchgehend einen vorbestimmten Schwellenwert (Schritt ST6), bei dem Ausführungsbeispiel den Wert "80" erreicht oder überschritten haben, der durch die Steuereinrichtung vorgebbar ist.

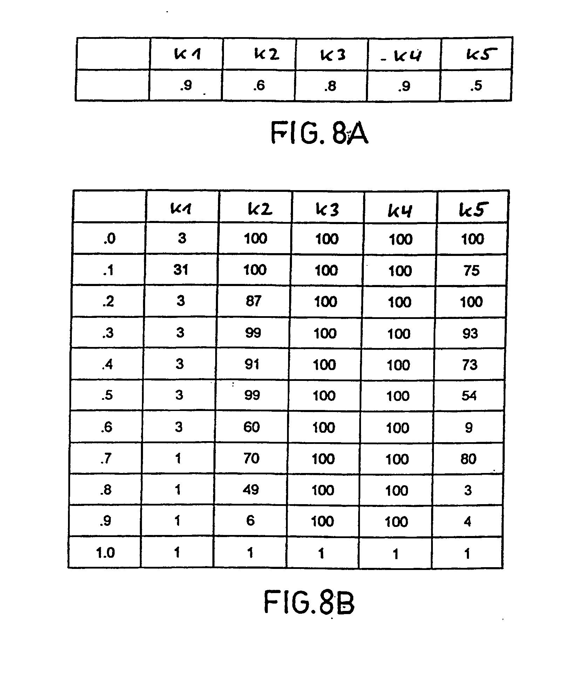

Dieser Zustand ist bei dem Ausführungsbeispiel in der Zählermatrix gemäß Fig. 8b in Bezug auf die Kenngrößen K3 und K4 erreicht, denn bei diesen Kenngrößen weisen die diesen Kenngrößen zugeordneten Zähler, ausgehend von dem Teilintervallwert 0.0, in einem durchgehenden Intervall, nämlich jeweils von 0.0 - 0.9, den Wert 100 auf, also einen Wert, der den vorbestimmten Schwellenwert von 80 überschreitet.

Demgegenüber ist dieser Zustand beispielsweise in Bezug auf die Kenngröße K5 nicht erreicht, weil zwar die dieser Kenngröße und den Teilintervallwerten 0.0, 0.2 und 0.3 zugeordneten Zähler einen Zählwert aufweisen, der größer als der Schwellenwert von 80 ist, der der Kenngröße K5 und dem Teilintervallwert 0.1 zugeordnete Zähler jedoch einen Zählwert von 75, also unterhalb des vorbestimmten Schwellenwertes, aufweist. Daraus ergibt sich, daß in Bezug auf die betreffende Kenngröße noch nicht genügend Testvektoren ausgewertet worden sind, um ein zuverlässiges Ergebnis zu erhalten.

Um ein hinreichend zuverlässiges Ergebnis zu erhalten, können daher weitere Testvektoren erzeugt und ausgewertet werden.

Im Verlaufe des erfindungsgemäßen Verfahrens können in Bezug auf die Kenngrößen Konstellationen auftreten, in denen der "eingeschwungene" Zustand im Hinblick auf eine oder mehrere der Kenngrößen darin besteht, daß keiner der Zähler den vorbestimmten Zählwert erreicht. Um zu verhindern, daß das erfindungsgemäße Verfahren bei einer solchen Konstellation in eine Endlosschleife läuft, kann die Auswertung von Testvektoren in Bezug auf ein Testbeispiel bei einer bestimmten Maximalzahl von Zyklen beendet werden. Kenngrößen, deren Zähler alle unterhalb des Schwellenwertes liegen, wird als vorbestimmtes Zwischenergebnis vorzugsweise 0.0 zugeordnet.

Aus der Zeichnung ist nicht ersichtlich und deshalb wird hier erläutert, daß sich im "eingeschwungenen" Zustand die Zählermatrix folgende Gestalt annimmt:

Von den der Kenngröße K1 zugeordneten Zählern überschreitet keiner den vorbestimmten Schwellenwert von "80".

Von den der Kenngröße K2 zugeordneten Zählern überschreiten die dieser Kenngröße und den Teilintervallwerten 0.0 - 0.5 zugeordneten Zählern den Schwellenwert, während die dieser Kenngröße und den Teilintervallwerten 0.6 - 1.0 zugeordneten Zähler den Schwellenwert unterschreiten.

Von den der Kenngröße K3 zugeordneten Zählern erreichen oder überschreiten sämtliche der dieser Kenngröße und den Teilintervallwerten 0.0 - 0.9 zugeordneten Zähler den Schwellenwert.

Von den der Kenngröße K4 zugeordneten Zählern überschreiten sämtliche der dieser Kenngröße und den Teilintervallwerten 0.0 - 0.9 zugeordneten Zähler den Schwellenwert.

Von den der Kenngröße K5 zugeordneten Zählern überschreiten die dieser Kenngröße und den Teilintervallwerten 0.0 - 0.3 zugeordneten Zähler den vorbestimmten Schwellenwert, während die dieser Kenngröße und den Teilintervallwerten 0.4 - 1.0 zugeordneten Zähler den Schwellenwert unterschreiten.

Daran anschließend wird in dem erfindungsgemäßen Verfahren jeder Kenngröße K1 - K5 als Zwischenergebnis der Maximalwert unter denjenigen, ausgehend von dem niedrigsten Teilintervallwert, also 0.0, aufeinanderfolgenden Teilintervallwerten zugeordnet, bei denen der zugeordnete Zähler den vorbestimmten Schwellenwert erreicht oder überschreitet. Somit wird der Kenngröße K1 als Zwischenergebnis der Wert 0.0, der Kenngröße K2 der Teilintervallwert 0.5, den Kenngrößen K3 und K4 jeweils der Teilintervallwert 0.9 und der Kenngröße K5 der Teilintervallwert 0.3 zugeordnet.

Daran anschließend wird ein Ergebnisvektor (Schritt ST45) gebildet, in dem jeder Kenngröße ein Endergebnis zugeordnet ist, das sich nach folgender Formel berechnet:

$$\text{Endergebnis} = \text{maximaler Teilintervallwert minus Zwischenergebnis minus Subtrahent}$$

wobei Subtrahent vorzugsweise = 0.1 ist.

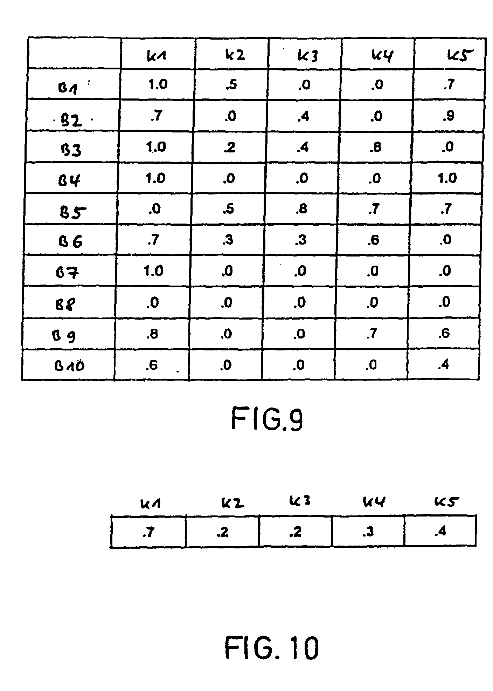

Mit einem maximalen Teilintervallwert von 1.0 ergibt sich aus den Zwischenergebnissen für das Beispiel B1 ein Ergebnisvektor, wie er in der Tabelle gemäß Fig. 9 in der ersten Zeile dargestellt ist.

Nach Bildung eines Ergebnisvektors für ein Testbeispiel können in dem erfindungsgemäßen Verfahren ggf. noch weitere Ergebnisvektoren (Schritte ST46- ST48) für dieses Testbeispiel gebildet werden, um beispielsweise die Zuverlässigkeit der in dem Ergebnisvektor enthaltenen Ergebnisse zu überprüfen. Hierbei wird jeweils der in den vorangegangen Verfahrensschritten für das betreffende Testbeispiel ermittelte Ergebnisvektor als aktueller Ergebnisvektor abgespeichert.

Nach Ermittlung eines endgültigen Ergebnisvektors für ein Testbeispiel ist die Auswertung dieses Testbeispieles abgeschlossen (Schritt ST47).

Daran anschließend wird jedes der weiteren Beispiele B2 - B10 als Testbeispiel ausgewählt, und es werden in der oben beschriebenen Weise Testvektoren erzeugt und ausgewertet, so daß sich schließlich für jedes Testbeispiel ein Ergebnisvektor ergibt (Schritt ST53), wie dies in der Tabelle gemäß Fig. 9 dargestellt ist.

Nach Ermittlung eines Ergebnisvektors für jedes der Beispiele B1 - B10 wird dann in dem erfindungsgemäßen Verfahren aus den abgespeicherten, zu den einzelnen Betriebszuständen B1 - B10 gehörigen Ergebnisvektoren ein Gesamt-Ergebnisvektor gebildet (Schritte ST51-ST52). Dies geschieht bei dem Ausführungsbeispiel durch Bildung des arithmetischen Mittelwertes sämtlicher Ergebnisvektoren.

Der sich bei den Ergebnisvektoren gemäß der Tabelle in Fig. 9 ergebende Gesamt-Ergebnisvektor ist in Fig. 10 dargestellt. Die Elemente des Gesamt-Ergebnisvektors bilden ein Maß (Relevanzmaß) für den Einfluß der den jeweiligen Elementen zugeordneten Kenngrößen K1 - K5 auf die Funktion des Kommunikationsnetzes 2.

Daraus, daß der Kenngröße K1 ein Wert von 0.7 als Maß für den Einfluß dieser Kenngröße auf die Funktion des Kommunikationsnetzes zugeordnet ist, während den anderen Kenngrößen K2 - K5 geringere Werte zugeordnet sind, ergibt sich, daß die Kenngröße K1 den größten Einfluß auf die Funktionsfähigkeit des Kommunikationsnetzes 2 aufweist.

In entsprechender Weise ergibt sich aus den den Kenngrößen K2 und K3 zugeordneten Werten von 0.2, daß diese Kenngrößen den geringsten Einfluß auf die Funktionsfähigkeit des Kommunikationsnetzes 2 haben.

Daraus ergibt sich, daß dann, wenn die dem Netzknoten K1 zugeordnete Kenngröße, nämlich die Datendurchsatzrate an diesem Netzknoten, den Kenngrößenwert "Überlast" annimmt, eher die Gefahr besteht, daß das Kommunikationsnetz 2 zusammenbricht, als in dem Fall, daß die Kenngröße des Netzknotens K2 den Kenngrößenwert "Überlast" annimmt. Ein Vergleich mit der Tabelle gemäß Fig. 3 bestätigt dieses Ergebnis, weil unter denjenigen Betriebszuständen B1 - B10, in denen das Kommunikationsnetz 2 in der gewünschten Weise bearbeitet, sich nur ein Betriebszustand, nämlich der Betriebszustand B5, befindet, bei dem der Netzknoten K1 unter "Überlast" arbeitet, während sich unter diesen Betriebszuständen B1 - B10 fünf Betriebszustände, nämlich B1, B3, B4, B7 und B10 befinden, unter denen der Knoten K2 unter "Überlast" arbeitet, ohne daß hierdurch die Funktionsfähigkeit des Kommunikationsnetzes 2 beeinträchtigt ist.

Ausgehend von dem Gesamt-Ergebnisvektor, der in der Speichereinrichtung 22 abgespeichert wird, teilt die in Fig. 2 dargestellte erfindungsgemäße Vorrichtung die Ressourcen im Kommunikationsnetz 2 wie folgt zu:

Es sei angenommen, daß sich das Kommunikationsnetz 2 in dem Betriebszustand B6 befindet, d.h. die Datendurchsatzrate an den Netzknoten K1 bis K4 liegt unter dem vorbestimmten Datendurchsatzraten-Schwellenwert, d.h. die Kenngrößen K1 bis K4 nehmen die Kenngrößenwerte "normal" an (vgl. Fig. 3), während die Datendurchsatzrate an dem Netzknoten K5 den vorbestimmten Datendurchsatzraten-Schwellenwert erreicht oder überschreitet, d.h. die Kenngröße K5 nimmt den Kenngrößenwert "Überlast" an. Hierbei werden die jeweils momentanen Datendurchsatzraten an den Netzknoten K1 - K5 durch die Sensoren S1 - S5 festgestellt und jeweils in der Speichereinrichtung 22 abgespeichert.

Die Steuereinrichtung 34 vergleicht den jeweils momentanen Betriebszustand anhand seiner jeweils momentanen Kenngrößenwerte mit den in der Speichereinrichtung 28 abgespeicherten Betriebszuständen B1 - B10.

Würde zusätzlich zu dem Knoten K5 auch noch der Knoten K1 unter "Überlast" arbeiten, so würde dies zu einem Zusammenbruch des Kommunikatonsnetzes 2 führen (siehe oben), da der sich dann ergebende Betriebszustand nicht zu den in der Tabelle gemäß Fig. 3 dargestellten akzeptablen Betriebszuständen gehört.

Wird nun durch den Sensor S1 festgestellt, daß die Datendurchsatzrate an dem Netzknoten K1 ansteigt und sich dem vorbestimmten Datendurchsatzraten-Schwellenwert annähert, so ändert die Steuereinrichtung die Zuteilung der Ressourcen in dem Kommunikationsnetz 2. Bei dem Ausführungsbeispiel gemäß den Fig. 1 und 2 kann dies entweder dadurch geschehen, daß die bisher nicht in das Netz eingeschalteten Leitungen L6 und L7 in das Netz eingeschaltet werden oder daß weiteren Teilnehmerstationen, die zu diesem Zeitpunkt noch nicht an das Netz angeschaltet sind, der Zugang zum Netz gesperrt wird.

Nach Einschalten der Leitungen L6 und L7 in das Netz sind direkte Verbindungen des Netzknotens K5 mit dem Netzknoten K4 und dem Netzknoten K3 geschaffen, so daß eine Datenübertragung zwischen diesen Netzknoten nicht mehr nur über den Netzknoten K1, sondern auch direkt möglich ist. Auf diese Weise ist die Belastung des Netzknotens K1 verringert, so daß dessen Datendurchsatzrate sinkt und nicht mehr die Gefahr besteht, daß die Datendurchsatzrate den Datendurchsatzraten-Schwellenwert erreicht oder überschreitet.

Unterschreitet die Datendurchsatzrate an dem Knoten K1 einen vorbestimmten Wert, so sind die Leitungen L6 und L7 nicht mehr erforderlich und können vom Netz getrennt werden. Dies spart die Betriebskosten für die Leitungen L6 und L7 oder ermöglicht deren Betrieb in einem anderen Netz.

Auf diese Weise ist mit dem erfindungsgemäßen Verfahren und der erfindungsgemäßen Vorrichtung das Zuteilen von Ressourcen in dem Kommunikationsnetz 2 in effektiver und zuverlässiger Weise ermöglicht. Ein Zusammenbrechen des Kommunikationsnetzes 2 wegen Überlastung und damit verbundene Fehlfunktionen bei der Datenübertragung zwischen den Teilnehmerstationen sind somit zuverlässig vermieden, ohne daß die Leitungen L6 und L7 ständig in das Netz eingeschaltet sein müssen.

**Patentansprüche**

1. Verfahren zum Zuteilen von industriellen oder technologischen Ressourcen in technischen Systemen, insbesondere zur Vermeidung von Fehlfunktionen technischer Systeme, wobei der Betriebszustand des Systems durch Werte von wenigstens zwei Kenngrößen repräsentiert wird, wobei

   a) für wenigstens drei unterschiedliche Betriebszustände des Systems (Beispiele), bei denen jeweils eine vorbestimmte Funktion des Systems erreicht ist, die zu dem jeweiligen Betriebszustand gehörigen Werte der Kenngrößen (Kenngrößenwerte) durch Detektionsmittel detektiert und in einem Speichermittel gespeichert werden und

b) durch paarweisen Vergleich von jeweils zwei Betriebszuständen, die durch die zugehörigen Kenngrößenwerte repräsentiert sind, ein Maß für den Einfluß der einzelnen Kenngrößen auf die Funktion des Systems ermittelt wird.

2.  Verfahren nach Anspruch 1, **dadurch gekennzeichnet, daß** anhand der in Schritt b) ermittelten Maße die Ressourcen des Systems so verteilt werden, daß die Kenngrößen Werte annehmen, die zu einem Betriebszustand führen, in dem die vorbestimmte Funktion des Systems erreicht ist.

3.  Verfahren nach Anspruch 1 oder 2, **dadurch gekennzeichnet, daß** in Schritt b)

    b1) ein Maximalwert, vorzugsweise der Wert 1, und ein Minimalwert, vorzugsweise der Wert 0, für ein erstes Maß (Toleranzmaß) für den Einfluß der einzelnen Kenngrößen auf die Funktion des Systems vorgegeben werden,

    b2) das zwischen dem Maximalwert und dem Minimalwert gebildete Intervall in Teilintervallwerte, vorzugsweise mit einem Abstand von 0.1, unterteilt wird,

    b3) eine Matrix von Zählern initialisiert wird, wobei jeweils einer Spalte der Matrix eine der Kenngrößen des Systems und jeweils einer Zeile der Matrix einer der in Schritt b2) gebildeten Teilintervallwerte zugeordnet sind oder wobei jeweils einer Spalte der Matrix einer der in Schritt b2) gebildeten Teilintervallwerte und jeweils einer Zeile der Matrix eine der Kenngrößen des Systems zugeordnet sind,

    b4) durch eine Steuereinrichtung ein erster der abgespeicherten Betriebszustände als Testbeispiel ausgewählt wird,

    b5) durch eine Auswerteeinrichtung ein Testvektor erzeugt und in den Speichermitteln abgespeichert wird, wobei die Anzahl der Elemente des Testvektors der Anzahl der Kenngrößen entspricht und in dem Testvektor jeder Kenngröße eine Zufallszahl zugeordnet ist, die einem der Teilintervallwerte gemäß Schritt b2) entspricht,

    b6) das Testbeispiel mit den weiteren abgespeicherten Betriebszuständen verglichen wird, um festzustellen, ob unter diesen Betriebszuständen zu dem Testbeispiel ein Referenzbeispiel existiert, wobei ein Referenzbeispiel dann existiert, wenn die Summe der Zufallszahlen des Testvektors, die den Kenngrößen, in denen sich das Testbeispiel von einem weiteren der abgespeicherten Betriebszustände unterscheidet, zugeordnet sind, kleiner als ein vorgegebener wert, vorzugsweise kleiner als 1 ist,

    b7) daß bei Vorliegen wenigstens eines Referenzbeispieles diejenigen Zähler der Zählermatrix um einen ersten vorbestimmten Zählwert inkrementiert werden, die den Kenngrößen, in denen sich das Referenzbeispiel von dem Testbeispiel unterscheidet, und den diesen Kenngrößen in dem Testvektor zugeordneten Teilintervallwerten gemäß Schritt b2) zugeordnet sind oder daß bei Nichtvorliegen eines Referenzbeispieles diejenigen Zähler der Zählermatrix um einen zweiten vorbestimmten Zählwert dekrementiert werden, die den Kenngrößen und den diesen Kenngrößen in dem Testvektor zugeordneten Teilintervallwerten zugeordnet sind.

4.  Verfahren nach Anspruch 3, **dadurch gekennzeichnet, daß** die Schritte b5) bis b7) solange wiederholt werden, bis wenigstens einer der einer Kenngröße zugeordneten Zähler einen vorbestimmten Schwellenwert erreicht oder überschritten hat.

5.  Verfahren nach Anspruch 3 oder 4, **dadurch gekennzeichnet, daß** die Schritte b5) bis b7) solange wiederholt werden, bis zu wenigstens zwei Kenngrößen wenigstens einer der diesen Kenngrößen zugeordneten Zähler einen vorbestimmten Schwellenwert erreicht oder überschritten hat.

6.  Verfahren nach einem der Ansprüche 3 bis 5, **dadurch gekennzeichnet, daß** die Schritte b5) bis b7) solange wiederholt werden, bis in Bezug zu den Kenngrößen, bei denen wenigstens einer der diesen Kenngrößen zugeordneten Zähler den vorbestimmten Schwellenwert erreicht oder überschritten hat, diejenigen Zähler, die diesen Schwellenwert erreichen oder überschreiten, aufeinanderfolgenden Teilintervallwerten zugeordnet sind, derart, daß die diesen Zählern zugeordneten Teilintervallwerte ausgehend von dem niedrigsten Teilintervallwert, vozugsweise dem Wert 0.0, ein geschlossenes Intervall bilden.

7.  Verfahren nach einem der vorhergehenden Ansprüche, **dadurch gekennzeichnet, daß**

c) jeder Kenngröße als Zwischenergebnis der Maximalwert unter denjenigen, ausgehend von dem niedrigsten Teilintervallwert, vorzugsweise dem Wert 0.0, aufeinanderfolgenden Teilintervallwerten zugeordnet wird, bei denen der zugeordnete Zähler den vorbestimmten Schwellenwert erreicht oder überschritten hat.

**8.** Verfahren nach Anspruch 7, **dadurch gekennzeichnet, daß**

d) ein Ergebnisvektor gebildet wird, in dem jeder Kenngröße ein Endergebnis zugeordnet ist, das sich nach folgender Formel berechnet:

Endergebnis = Maximaler Teilintervallwert

minus Zwischenergebnis minus Subtrahent,

wobei Subtrahent vorzugsweise = 0.1 ist.

**9.** Verfahren nach einem der Ansprüche 3 bis 8, **dadurch gekennzeichnet, daß** die Schritte b3)-b7), c) und d) für jedes Testbeispiel zur Bildung wenigstens eines weiteren Ergebnisvektors für dieses Testbeispiel wiederholt werden.

**10.** Verfahren nach einem der Ansprüche 3 bis 9, **dadurch gekennzeichnet, daß** für jeden abgespeicherten Betriebszustand (Beispiel) ein Ergebnisvektor ermittelt wird.

**11.** Verfahren nach Anspruch 10, **dadurch gekennzeichnet, daß** aus den für die abgespeicherten Betriebszustände ermittelten Ergebnisvektoren ein Gesamt-Ergebnisvektor, vorzugsweise durch Bildung des arithmetischen Mittelwertes der zu den einzelnen abgespeicherten Betriebszuständen ermittelten Ergebnisvektoren, gebildet wird, dessen Elemente ein zweites Maß (Relevanzmaß) für den Einfluß der den jeweiligen Elementen des Vektors zugeordneten Kenngrößen auf die Funktion des Systems bilden.

**12.** Verfahren nach einem der Ansprüche 3 bis 11, **dadurch gekennzeichnet, daß** in Schritt b3) jeder Zähler mit demselben Anfangswert initialisiert wird.

**13.** Verfahren nach einem der Ansprüche 3 bis 12, **dadurch gekennzeichnet, daß** der erste vorbestimmte Zählwert, um den die Zähler der Zählermatrix in Schritt b7) ggf. jeweils inkrementiert werden, gemäß folgender Formel berechnet wird:

erster vorbestimmter Zählwert = RND ((maximaler Zählwert - momentaner Zählwert des Zählers) * erster vorbestimmter Anpassungsfaktor),

wobei RND für eine Rundungsoperation steht und wobei der erste vorbestimmte Anpassungfaktor vorzugsweise 0.5 beträgt.

**14.** Verfahren nach einem der Ansprüche 3 bis 13, **dadurch gekennzeichnet, daß** der zweite vorbestimmte Zählwert um den die Zähler der Zählermatrix in Schritt b7) ggf. jeweils dekrementiert werden, gemäß folgender Formel berechnet wird:

zweiter vorbestimmter Zählwert = RND (momentaner Zählwert * zweiter

vorbestimmter Anpassungsfaktor),

wobei RND für eine Rundungsoperation steht, wobei der zweite vorbestimmte Anpassungsfaktor für diejenigen Zähler, deren momentaner Zählwert 1 beträgt, 0 beträgt, derart, daß diese Zähler nicht dekrementiert werden, und für die übrigen in Schritt b7) zu dekrementierenden Zähler vorzugsweise 0.25 beträgt.

**15.** Verfahren nach einem der Ansprüche 3 bis 14, **dadurch gekennzeichnet, daß** in Schritt b7) nur dann die betreffenden Zähler inkrementiert werden, wenn zu jedem Testbeispiel wenigstes zwei Referenzbeispiele existieren.

**16.** Verfahren nach einem der Ansprüche 3 bis 15, **dadurch gekennzeichnet, daß** in Schritt b7) nur dann die betreffenden Zähler inkrementiert werden, wenn zu dem Testbeispiel ein Referenzbeispiel oder mehrere Referenzbeispiele existiert bzw. existieren und hierbei in Bezug zu jeder der Kenngrößen wenigstens ein Referenzbeispiel vorliegt, bei dem der Kenngrößenwert dieser Kenngröße des Referenzbeispieles von dem Kenngrößenwert dieser Kenngröße des Testbeispiels abweicht.

**17.** Vorrichtung zum Zuteilen von industriellen oder technologischen Ressourcen in technischen Systemen, insbesondere zur Vermeidung von Fehlfunktionen technischer Systeme, **dadurch gekennzeichnet, daß** die Vorrichtung nach einem der Ansprüche 1 bis 16 arbeitet.

**Revendications**

**1.** Procédé pour attribuer des ressources industrielles ou technologiques dans des systèmes techniques, en particulier pour éviter des fonctionnements défectueux des systèmes techniques, l'état de marche du système étant représenté par des valeurs d'au moins deux grandeurs caractéristiques, dans lequel

a) pour au moins trois états de marche différents du système (exemples), pour chacun desquels un fonctionnement prédéterminé du système est atteint, les valeurs des grandeurs caractéristiques requises pour l'état de marche respectif (valeurs des grandeurs caractéristiques) sont détectées par des moyens de détection et sont mémorisées dans un moyen de mémoire et
b) par comparaison deux à deux de deux états de marche respectifs qui sont représentés par les valeurs des grandeurs caractéristiques requises, une mesure est trouvée pour l'entrée des grandeurs caractéristiques individuelles pour le fonctionnement du système.

**2.** Procédé selon la revendication 1,
**caractérisé en ce que**, à l'aide de la mesure trouvée dans l'étape b) les ressources du système sont réparties de sorte que les grandeurs caractéristiques prennent les valeurs qui conduisent à un état de marche dans lequel le fonctionnement prédéterminé du système est atteint.

**3.** Procédé selon la revendication 1 ou 2,
**caractérisé en ce que** dans l'étape b)

b1) une valeur maximale, de préférence la valeur 1, et une valeur minimale, de préférence la valeur 0, sont données pour une première mesure (mesure de tolérance) pour l'entrée des grandeurs caractéristiques individuelles sur le fonctionnement du système,

b2) l'intervalle formé entre la valeur maximale et la valeur minimale est divisé en valeurs d'intervalle partiel, de préférence avec un écart de 0,1,

b3) une matrice est initialisée à partir de nombres, grâce à quoi sont associées respectivement à une colonne de la matrice une des grandeurs caractéristiques du système, et respectivement, à une ligne de la matrice une des valeurs d'intervalle partiel formées dans l'étape b2), ou grâce à quoi sont associées respectivement à une colonne de la matrice une des valeurs d'intervalle partiel formées dans l'étape b2) et respectivement à une ligne de la matrice une des grandeurs caractéristiques du système,

b4) par un dispositif de commande, un premier des états de marche mémorisés est sélectionné comme exemple de test,

b5) par un dispositif d'analyse un vecteur de test est créé et mémorisé dans les moyens de mémoire, grâce à quoi le nombre des éléments du vecteur de test correspond au nombre des grandeurs caractéristiques et un nombre aléatoire qui correspond à l'une des valeurs d'intervalle partiel selon l'étape b2) est associé à chaque grandeur caractéristique dans le vecteur de test,

b6) l'exemple de test est comparé avec les autres états de marche mémorisés pour déterminer si, dans ces états de marche existe un exemple de référence pour l'exemple de test, grâce à quoi un exemple de référence existe alors, lorsque la somme des nombres aléatoires du vecteur de test qui sont associés aux grandeurs caractéristiques dans lesquelles l'exemple de test diffère d'un autre des états de marche mémorisés, est plus petite qu'une valeur donnée, de préférence plus petite que 1,

b7) **en ce que**, en cas d'existence d'au moins un exemple de référence, ces nombres de la matrice de nombres qui sont associés aux valeurs de nombres par lesquelles l'exemple de référence se distingue de l'exemple de test, et aux valeurs d'intervalle partiel associées à ces grandeurs caractéristiques dans le vecteur de test selon l'étape b2) sont incrémentés d'une première valeur numérique prédéterminée, ou **en ce que**, en cas d'inexistence d'un exemple de référence, ces nombres de la matrice de nombres, qui sont associés aux grandeurs caractéristiques et aux valeurs d'intervalle partiel associées à ces grandeurs caractéristiques dans le vecteur de test, sont décrémentés d'une seconde valeur numérique prédéterminée.

4. Procédé selon la revendication 3,
   **caractérisé en ce que** les étapes b5) à b7) sont répétées jusqu'à ce qu'au moins un des nombres associés à une grandeur caractéristique ait atteint ou dépassé une valeur de seuil prédéterminée.

5. Procédé selon la revendication 3 ou 4,
   **caractérisé en ce que** les étapes b5) à b7) sont répétées jusqu'à ce que, pour au moins deux grandeurs caractéristiques, au moins un des nombres associés à ces grandeurs caractéristiques ait atteint ou dépassé une valeur de seuil prédéterminée.

6. Procédé selon l'une des revendications 3 à 5,
   **caractérisé en ce que** les étapes b5) à b7) sont répétées jusqu'à ce que, en référence aux grandeurs caractéristiques, pour lesquelles au moins l'un des nombres associés à ces grandeurs caractéristiques a atteint ou dépassé la valeur de seuil prédéterminée, ces nombres qui atteignent ou dépassent cette valeur de seuil, sont associés aux valeurs d'intervalle partiel se suivant les unes les autres de sorte que les valeurs d'intervalle partiel associées à ces nombres forment un intervalle fermé venant de la valeur d'intervalle partiel la plus basse, de préférence de la valeur 0.0.

7. Procédé selon l'une des revendications précédentes,
   **caractérisé en ce que**

   c) chaque grandeur caractéristique est associée aux valeurs d'intervalle partiel se suivant les unes les autres, en tant que résultat intermédiaire de la valeur maximale au-dessous de celle-ci, venant de l'intervalle partiel le plus bas, de préférence de la valeur 0.0, pour lesquelles le nombre associé a atteint ou dépassé la valeur de seuil prédéterminée.

8. Procédé selon la revendication 7,
   **caractérisé en ce que**

   d) un vecteur intermédiaire est formé, dans lequel à chaque grandeur caractéristique est associé un résultat final qui se calcule selon la formule suivante :

   résultat final = valeur d'intervalle partiel maximale moins

   le résultat intermédiaire moins le nombre à soustraire, le

   nombre à soustraire étant de préférence = 0.1.

9. Procédé selon l'une des revendications 3 à 8,
   **caractérisé en ce que** les étapes b3) -b7), c) et d) sont répétées pour chaque exemple de test pour former au moins un autre vecteur de résultat pour cet exemple de test.

10. Procédé selon l'une des revendications 3 à 9,
    **caractérisé en ce que** pour chaque état de marche mémorisé (exemple) est trouvé un vecteur de résultat.

11. procédé selon la revendication 10,
    **caractérisé en ce qu'**à partir des vecteurs de résultat trouvés pour les états de marche mémorisés, un vecteur de résultat d'ensemble est construit, de préférence par la formation de la valeur moyenne arithmétique des vecteurs de résultat trouvés pour chacun des états de marche mémorisés, dont les éléments forment une deuxième mesure (mesure d'importance) pour l'entrée des grandeurs caractéristiques, associées à chaque élément du vecteur, sur le fonctionnement du système.

**12.** Procédé selon l'une des revendications 3 à 11,
**caractérisé en ce que** dans l'étape b3) chaque nombre est initialisé avec la même valeur de départ.

**13.** Procédé selon l'une des revendications 3 à 12,
**caractérisé en ce que** la première valeur de nombre prédéterminée pour laquelle sont incrémentés les nombres de la matrice de nombres dans l'étape b7), le cas échéant, est calculée selon la formule suivante :

première valeur de nombre prédéterminée = RND [(valeur de

nombre maximale - valeur de nombre instantané du nombre) * premier facteur de correction

prédéterminé],

RND étant une opération d'arrondissement et le premier facteur de correction s'élevant de préférence à 0.5.

**14.** procédé selon l'une des revendications 3 à 13,
**caractérisé en ce que** la seconde valeur de nombre prédéterminée pour laquelle sont décrémentés les nombres de la matrice de nombres dans l'étape b7), est calculée selon la formule suivante :

seconde valeur de nombre prédéterminée = RND (valeur de nombre instantanée * second facteur de correction prédéterminé),

RND étant une opération d'arrondissement et le second facteur de correction prédéterminé pour chaque nombre, dont la valeur de nombre instantanée s'élève à 1, s'élevant à 0 de sorte que ces nombres ne sont pas décrémentés, et s'élevant de préférence à 0,25 pour les nombres restant à décrémenter dans l'étape b7).

**15.** Procédé selon l'une des revendications 3 à 14,
**caractérisé en ce que** dans l'étape b7) seuls les nombres en cause sont incrémentés, lorsque pour chaque exemple de test existent au moins deux exemples de référence.

**16.** Procédé selon l'une des revendications 3 à 15,
**caractérisé en ce que** dans l'étape b7), seuls les nombres en cause sont incrémentés, lorsqu'un exemple de référence ou plusieurs exemples de référence existent pour l'exemple de test et par conséquent, existe au moins un exemple de référence en relation avec chacune des grandeurs caractéristiques, pour lequel la valeur de grandeur caractéristique de ces grandeurs caractéristiques de l'exemple de référence s'écarte de la valeur de grandeur caractéristique de ces grandeurs caractéristiques de l'exemple de test.

**17.** Dispositif pour répartir les ressources industrielles ou technologiques dans un système technique, en particulier pour éviter des fonctionnements défectueux du système technique,
**caractérisé en ce que** le dispositif travaille selon l'une des revendications 1 à 16.

**Claims**

**1.** Method for allocating industrial or technological resources in technical systems, in particular to avoid malfunctions of technical systems, wherein the operating state of the system is represented by values of at least two parameters, wherein

a) the values of the parameters (parameter values) pertaining to the respective operating state are detected by detection means and stored in a storage medium for at least three different operating states of the system (examples) in which a respective predetermined function of the system is achieved, and

b) a measure of the influence of the individual parameters on the function of the system is ascertained by comparison in pairs of two respective operating states represented by the associated parameter values.

2. Method according to claim 1, **characterised in that** the resources of the system are distributed with the aid of the measures ascertained in step b) in such a way that the parameters assume values which lead to an operating state in which the predetermined function of the system is achieved.

3. Method according to claim 1 or 2, **characterised in that** in step b)

b1) a maximum value, preferably the value 1, and a minimum value, preferably the value 0, are preset for a first measure (tolerance measure) of the influence of the individual parameters on the function of the system,

b2) the interval formed between the maximum value and the minimum value is divided into part interval values, preferably with a spacing of 0.1,

b3) a matrix of counters is initialised, one of the parameters of the system being allocated to a respective column of the matrix and one of the part interval values formed in step b2) being allocated to a respective row of the matrix or one of the part interval values formed in step b2) being allocated to a respective column of the matrix and one of the parameters of the system being allocated to a respective row of the matrix,

b4) a first operating state is selected as a test example from those stored by a control device,

b5) a test vector is produced by an evaluation device and is stored in the storage media, the number of elements of the test vector corresponding to the number of parameters and a random number corresponding to one of the part interval values in accordance with step b2) being allocated to each parameter in the test vector,

b6) the test example is compared with the further stored operating states to establish whether a reference example for the test example exists under these operating states, a reference example existing if the sum of the random numbers of the test vector which are allocated to the parameters in which the test example differs from a further operating state of those stored, is less than a predetermined value, preferably less than 1,

b7) that in the presence of at least one reference example the counters of the counter matrix which are allocated to the parameters, in which the reference example differs from the test example, and to the part interval values in accordance with step b2) allocated to these parameters in the test vector are incremented by a first predetermined count, or that in the absence of a reference example the counters of the counter matrix which are allocated to the parameters and to the part interval values allocated to these parameters in the test vector are decremented by a second predetermined count.

4. Method according to claim 3, **characterised in that** steps b5) to b7) are repeated until at least one of the counters allocated to a parameter has reached or exceeded a predetermined threshold.

5. Method according to claim 3 or 4, **characterised in that** steps b5) to b7) are repeated until at least two parameters of at least one of the counters allocated to these parameters has reached or exceeded a predetermined threshold.

6. Method according to any of claims 3 to 5, **characterised in that** steps b5) to b7) are repeated until, with respect to the parameters in which at least one of the counters allocated to these parameters has reached or exceeded the predetermined threshold, the counters which reach or exceed this threshold are allocated successive part interval values in such a way that the part interval values allocated to these counters, proceeding from the lowest part interval value, preferably the value 0.0, form a closed interval.

7. Method according to any of the preceding claims, **characterised in that**

c) proceeding from the lowest part interval value, preferably the value 0.0, successive part interval values are allocated to each parameter as an intermediate result of the maximum value thereof, in which part interval values the allocated counter has reached or exceeded the predetermined threshold.

8. Method according to claim 7, **characterised in that**

d) a result vector is formed in which an end result, calculated in accordance with the following formula, is allocated to each parameter:

end result = maximum part interval value minus intermediate result minus subtrahend,

wherein subtrahend is preferably 0.1.

9.  Method according to any of claims 3 to 8, **characterised in that** steps b3) to b7), c) and d) are repeated for each test example to form at least one further result vector for this test example.

10. Method according to any of claims 3 to 9, **characterised in that** a result vector is ascertained for each stored operating state (example).

11. Method according to claim 10, **characterised in that** an overall result vector is formed from the result vectors ascertained for the stored operating states, preferably by arithmetic averaging of the result vectors ascertained for the individually stored operating states, the elements of which overall result vector form a second measure (relevance measure) of the influence of the parameters allocated to the respective elements of the vector on the function of the system.

12. Method according to any of claims 3 to 11, **characterised in that** in step b3) each counter is initialised with the same initial value.

13. Method according to any of claims 3 to 12, **characterised in that** the first predetermined count by which the counters of the counter matrix are optionally respectively incremented in step b7), is calculated in accordance with the following formula:

first predetermined count = RND ((maximum count minus

instantaneous count of the counter) * first predetermined

adjusting factor),

wherein RND represent a rounding operation and the first predetermined adjusting factor is preferably 0.5.

14. Method according to any of claims 3 to 13, **characterised in that** the second predetermined count by which the counters of the counter matrix are optionally respectively decremented in step b7), is calculated in accordance with the following formula:

second predetermined count = RND (instantaneous count * second

predetermined adjusting factor),

wherein RND represents a rounding operation, wherein the second predetermined adjusting factor for the counters of which the instantaneous count is 1, is 0 in such a way that these counters are not decremented and for the remaining counters to be decremented in step b7) is preferably 0.25.

15. Method according to any of claims 3 to 14, **characterised in that** in step b7) the relevant counters are incremented only if there are at least two reference examples for each test example.

16. Method according to any of claims 3 to 15, **characterised in that** in step b7) the relevant counters are incremented only if there is/are one or more reference examples for the test example and there is at least one reference example with respect to each of the parameters, in which reference example the parameter value of this parameter of the reference example differs from the parameter value of this parameter of the test example.

17. Device for allocating industrial or technological resources in technical systems, in particular to avoid malfunctions of technical systems, **characterised in that** the device operates in accordance with any of claims 1 to 16.

Legende

——▶ Verfahrensschritt

— — —▶ Datenfluß

①——— Anschlußpunkt Verbindungslinie 1

**Start**

S1-S5

ST1

Sensoren

Aufzeichnen eines
Betriebszustandes
(Beispiels)

Beispielbasis
(Aufzeichnung
aller Beispiele)

ST2

Alle Beispiele
erfaßt

Nein

Ja

ST3

Ende Aufzeichnung
der beobachteten
Beispiele

①

②

FIG. A1

FIG. A2

ST4 — Start Auswertung

ST5 — Setzen der Umgebung innerhalb der Teilintervallwerte als gleichartig gelten

ST6 — Wahl Schwellenwert für Zähler der Zählermatrix

ST7 — Wahl Mindestzahl Zyklen

ST8 — Wahl maximaler Zählwert der Zähler

ST9 — Wahl Auswertungsregel

ST10 — Wahl Abstufung der Teilintervalle

⑧  ⑨                    ⑩                           ⑥ ④ ②
                                                    ⑦ ⑤ ③

ST 12

Erstes/nächstes
Beispiel auswählen

ST 11

Zählermatrix
initialisieren

Testbeispiel                    Referenz-
                                beispiele

ST 13        ST 14        ST 15

Start          Speicher      Erste /
Erzeugen       leeren        nächste
Testvektor                   Kenngröße
                             auswählen

                                    ST 16

                             Gesamtwert der Zählwerte der
                             Zähler dieser Kenngröße finden

                                    ST 17

                             (Pseudo-) Zufallszahl zwischen
                             1 und Gesamtzahl bilden

ST 19                               ST 18

Teilintervallwert
dieser Kenngröße      Teilintervallwert zuordnen
als Teil des Testvektors speichern

                             ST 20

                             Alle
                             Kenngrößen
                             berücksichtigt      Nein

                             Ja

                             ST 21

                             Ende Erzeugen
                             Testvektor

⑧ ⑫                          ⑯ ⑥ ④
                             ⑦ ⑤ ③
⑬ ⑭ ⑮              ⑪

FIG. A3

Start Auswerten
Testvektor

ST22

Speicher leeren

ST23

Erstes/nächstes
Beispiel auswählen

ST24

Suche Kenngrößen in denen
sich Testbeispiel und
Beispiel unterscheiden

ST25

Anzahl unterschiedlicher
Kenngrößen beim
aktuellen Beispiel > 0

ST26

Nein

Ja

Addiere Zufallszahlen des
Testvektors der unterschiedlichen Kenngrößen

ST27

Aktuell geprüfte
Zufallszahlen
des Testvektors

Summe < 1.0

ST28

Nein

Ja

Als bestätigt speichern

ST29

Liste bestätigter
Teilintervallwerte

Alle Werte des
Testvektors
bestätigt

ST30

Nein

Ja

Alle Beispiele
berücksichtigt

ST32

Nein

Ja

Ende Auswerten
Testvektor

ST31

FIG. A4

20

⑧ ⑫ ⑰ ST33 ⑥ ④

⑬ ⑦⑤③

**Beginn Inkrementieren /
Dekrementieren der Zähler
der Zählermatrix** ST33

**Erste / nächste
Kenngröße
auswählen** ST34

**Testbeispiel
unterscheidet sich in
dieser Kenngröße von
zumindest einem Beispiel** ST35
Nein

Ja

**Teilintervallwert zu dieser
Kenngröße wurde
zumindest einmal
bestätigt** ST36

Nein ST37

Ja ST38

**Dekrementiere Zähler
von unbestätigten
Teilintervallwerten;
minimaler Zählwert
(z.B.1) bleibt erhalten;
z.B. subtrahiere
(Aktueller Zählwert/4)**

**Inkrementiere Zähler
von bestätigten
Teilintervallwerten;
z.B. addiere
((Maximalzahl -
Aktueller Zählwert)/2)**

**Alle
Kenngrößen
berücksichtigt** ST39
Nein

Ja ST40

**Ende Inkrementieren /
Dekrementiieren der Zähler**

ST42

**Mindestzyklenzahl
erreicht** ST41

**Neuer Zyklus**
Nein

Ja

⑬ ⑭ ⑱ ④

③

FIG. A5

(13)    (14)    (18)    (4)(3)

ST44

Neuer Zyklus ◀— In allen Kenngrößen bilden
einer Kenngröße zugeordnete
Zähler, die den Schwellenwert
des Zählwertes erreichen /
überschreiten, ausgehend vom
geringsten Teilintervallwert ein
geschlossenes Intervall    ST43

Nein

Ja

ST45

Erzeuge
Ergebnisvektor

ST48

Aktuellen als
vorausgehenden
Ergebnisvektor
speichern    ◀—    Es existiert mehr als ein
Ergebnisvektor zu
demselben Testbeispiel    ST46

Nein

Ja

vorausgehender
Ergebnisvektor        aktueller
Ergebnisvektor

Gleich

Nein    ST47

Ja

ST53    ST49

Testbeispiele
mit Ergebnisvektor    ◀—    Speicher Ergebnisvektor als Attribut
dieses Testbeispiels    —▶    Ergebnisvektor

ST50

Alle Beispiele
als Testbeispiel
ausgewertet?

Nein

Ja

(20)    (19)

FIG. A6

22

EP 1 049 963 B1

FIG. A7

23

FIG. 1

FIG.2

| | K1 | K2 | K3 | K4 | K5 |
|---|---|---|---|---|---|
| B1 | normal | Überlast | Überlast | Überlast | normal |
| B2 | normal | normal | normal | Überlast | normal |
| B3 | normal | Überlast | Überlast | normal | Überlast |
| B4 | normal | Überlast | normal | Überlast | normal |
| B5 | Überlast | normal | normal | normal | normal |
| B6 | normal | normal | normal | normal | Überlast |
| B7 | normal | Überlast | Überlast | normal | normal |
| B8 | normal | normal | normal | normal | normal |
| B9 | normal | normal | Überlast | normal | normal |
| B10 | normal | Überlast | normal | normal | normal |

FIG.3

25

|  | K1 | K2 | K3 | K4 | K5 |
|---|---|---|---|---|---|
|  | .5 | .4 | .6 | .8 | .1 |

## FIG.4A

|  | K1 | K2 | K3 | K4 | K5 |
|---|---|---|---|---|---|
| .0 | 1 | 1 | 1 | 1 | 1 |
| .1 | 1 | 1 | 1 | 1 | 51 |
| .2 | 1 | 1 | 1 | 1 | 1 |
| .3 | 1 | 1 | 1 | 1 | 1 |
| .4 | 1 | 1 | 1 | 1 | 1 |
| .5 | 1 | 1 | 1 | 1 | 1 |
| .6 | 1 | 1 | 51 | 1 | 1 |
| .7 | 1 | 1 | 1 | 1 | 1 |
| .8 | 1 | 1 | 1 | 51 | 1 |
| .9 | 1 | 1 | 1 | 1 | 1 |
| 1.0 | 1 | 1 | 1 | 1 | 1 |

## FIG.4B

| | K1 | K2 | K3 | K4 | K5 |
|---|---|---|---|---|---|
| | 1.0 | .3 | .6 | .8 | .1 |

## FIG.5A

| | K1 | K2 | K3 | K4 | K5 |
|---|---|---|---|---|---|
| .0 | 1 | 1 | 1 | 1 | 1 |
| .1 | 1 | 1 | 1 | 1 | 76 |
| .2 | 1 | 1 | 1 | 1 | 1 |
| .3 | 1 | 51 | 1 | 1 | 1 |
| .4 | 1 | 1 | 1 | 1 | 1 |
| .5 | 1 | 1 | 1 | 1 | 1 |
| .6 | 1 | 1 | 76 | 1 | 1 |
| .7 | 1 | 1 | 1 | 1 | 1 |
| .8 | 1 | 1 | 1 | 76 | 1 |
| .9 | 1 | 1 | 1 | 1 | 1 |
| 1.0 | 1 | 1 | 1 | 1 | 1 |

## FIG.5B

| | k1 | k2 | k3 | k4 | k5 |
|---|---|---|---|---|---|
| | 1.0 | .3 | .6 | .8 | .1 |

## FIG.6A

| | k1 | k2 | k3 | k4 | k5 |
|---|---|---|---|---|---|
| .0 | 1 | 1 | 1 | 1 | 1 |
| .1 | 1 | 1 | 1 | 1 | 88 |
| .2 | 1 | 1 | 1 | 1 | 1 |
| .3 | 1 | 76 | 1 | 1 | 1 |
| .4 | 1 | 1 | 1 | 1 | 1 |
| .5 | 1 | 1 | 1 | 1 | 1 |
| .6 | 1 | 1 | 88 | 1 | 1 |
| .7 | 1 | 1 | 1 | 1 | 1 |
| .8 | 1 | 1 | 1 | 88 | 1 |
| .9 | 1 | 1 | 1 | 1 | 1 |
| 1.0 | 1 | 1 | 1 | 1 | 1 |

## FIG.6B

| | k1 | k2 | k3 | k4 | k5 |
|---|---|---|---|---|---|
| | .3 | .0 | .9 | .3 | .0 |

## FIG. 7A

| | k1 | k2 | k3 | k4 | k5 |
|---|---|---|---|---|---|
| .0 | 30 | 100 | 100 | 100 | 100 |
| .1 | 3 | 100 | 100 | 1 | 71 |
| .2 | 1 | 100 | 1 | 100 | 41 |
| .3 | 9 | 100 | 100 | 100 | 51 |
| .4 | 5 | 99 | 100 | 100 | 87 |
| .5 | 5 | 73 | 100 | 100 | 1 |
| .6 | 3 | 69 | 100 | 100 | 12 |
| .7 | 1 | 12 | 100 | 1 | 1 |
| .8 | 1 | 68 | 100 | 100 | 4 |
| .9 | 1 | 1 | 100 | 100 | 1 |
| 1.0 | 1 | 1 | 1 | 1 | 1 |

## FIG.7B

| | k1 | k2 | k3 | k4 | k5 |
|---|---|---|---|---|---|
| | .9 | .6 | .8 | .9 | .5 |

## FIG. 8A

| | k1 | k2 | k3 | k4 | k5 |
|---|---|---|---|---|---|
| .0 | 3 | 100 | 100 | 100 | 100 |
| .1 | 31 | 100 | 100 | 100 | 75 |
| .2 | 3 | 87 | 100 | 100 | 100 |
| .3 | 3 | 99 | 100 | 100 | 93 |
| .4 | 3 | 91 | 100 | 100 | 73 |
| .5 | 3 | 99 | 100 | 100 | 54 |
| .6 | 3 | 60 | 100 | 100 | 9 |
| .7 | 1 | 70 | 100 | 100 | 80 |
| .8 | 1 | 49 | 100 | 100 | 3 |
| .9 | 1 | 6 | 100 | 100 | 4 |
| 1.0 | 1 | 1 | 1 | 1 | 1 |

## FIG.8B

| | k1 | k2 | k3 | k4 | k5 |
|---|---|---|---|---|---|
| B1 | 1.0 | .5 | .0 | .0 | .7 |
| B2 | .7 | .0 | .4 | .0 | .9 |
| B3 | 1.0 | .2 | .4 | .8 | .0 |
| B4 | 1.0 | .0 | .0 | .0 | 1.0 |
| B5 | .0 | .5 | .8 | .7 | .7 |
| B6 | .7 | .3 | .3 | .6 | .0 |
| B7 | 1.0 | .0 | .0 | .0 | .0 |
| B8 | .0 | .0 | .0 | .0 | .0 |
| B9 | .8 | .0 | .0 | .7 | .6 |
| B10 | .6 | .0 | .0 | .0 | .4 |

FIG.9

| k1 | k2 | k3 | k4 | k5 |
|---|---|---|---|---|
| .7 | .2 | .2 | .3 | .4 |

FIG. 10